(19) Europäisches Patentamt / European Patent Office / Office européen des brevets

(11) **EP 2 177 108 B1**

(12) **EUROPEAN PATENT SPECIFICATION**

(45) Date of publication and mention
of the grant of the patent:
**22.01.2014 Bulletin 2014/04**

(51) Int Cl.:
***A23F 3/16*** (2006.01)

(21) Application number: **08826882.6**

(22) Date of filing: **07.08.2008**

(86) International application number:
**PCT/JP2008/002140**

(87) International publication number:
**WO 2009/019876 (12.02.2009 Gazette 2009/07)**

(54) **METHOD FOR PRODUCTION OF TEA EXTRACT**

VERFAHREN ZUR HERSTELLUNG EINES TEE-EXTRAKTS

PROCÉDÉ DE PRODUCTION D'EXTRAIT DE THÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.08.2007 JP 2007206754**
**27.12.2007 JP 2007337521**

(43) Date of publication of application:
**21.04.2010 Bulletin 2010/16**

(73) Proprietor: **Kao Corporation**
**Chuo-Ku**
**Tokyo 103-8210 (JP)**

(72) Inventors:
• **FUKUDA, Masahiro**
**Tokyo 131-8501 (JP)**
• **ITAYA, Eri**
**Tokyo 131-8501 (JP)**
• **TAKAHASHI, Hirokazu**
**Tokyo 131-8501 (JP)**
• **OGASAWARA, Miwa**
**Tokyo 131-8501 (JP)**
• **SATO, Hitoshi**
**Kamisu-shi**
**Ibaraki 314-0103 (JP)**
• **SHIKATA, Kenichi**
**Kamisu-shi**
**Ibaraki 314-0103 (JP)**
• **SHIBATA, Keiji**
**Kamisu-shi**
**Ibaraki 314-0103 (JP)**

(74) Representative: **HOFFMANN EITLE**
**Patent- und Rechtsanwälte**
**Arabellastrasse 4**
**81925 München (DE)**

(56) References cited:
**JP-A- 05 049 401      JP-A- 06 311 846**
**JP-A- 10 290 667      JP-A- 2003 199 495**
**JP-A- 2005 130 809    JP-A- 2006 340 646**
**JP-A- 2007 104 967    US-A1- 2006 263 454**

• **DATABASE WPI Week 200437 Thomson Scientific, London, GB; AN 2004-396016 XP002688619, & JP 2004 147606 A (ITOEN KK) 27 May 2004 (2004-05-27)**
• **DATABASE WPI Week 200732 Thomson Scientific, London, GB; AN 2007-338057 XP002688620, & JP 2007 104967 A (KAO CORP) 26 April 2007 (2007-04-26)**

**Description**

**Field of the Invention**

This invention relates to a process for producing a tea extract.

**Background of the Invention**

Catechins are reported to have physiological effects, such as a cholesterol- suppressing effect and an $\alpha$-amylase activity-inhibiting effect (Patent Documents 1 and 2). In order for such effects to materialize, it is effective to make it easier to digest a large amount of catechins. As a way to add a high concentration of catechins to a beverage, there is a method known to add dissolved catechins to a beverage, for example, by using a concentrated tea extract (Patent Document 3) or the like. This method, however, has the possibility that an unpleasant abnormal taste called "acrid taste" could be caused depending on how to extract tea.

So far, many technologies have been proposed to reduce such acrid taste. Among them are a method that adds spilanthol or a high-sweetness sweetener derived from a plant extract or plant essential oil containing spilanthol (Patent Document 4), a method that adds a taste improver containing Vicenin-2 (Patent Document 5), a method that adds a carbohydrate derivative of $\alpha,\alpha'$-trehalose (Patent Document 6), and so on. Many attempts have also been made to reduce the bitterness of tea, and hence, to improve its palatability. For example, a technology that adds cyclodextrin is known (Patent Documents 7 and 8)

However, it is virtually impossible to reduce such unpleasant acrid taste sufficiently, merely by adding such a sweetener or the like in a small amount to a tea extract containing non-polymer catechins. Moreover, it is likely that the taste and aroma inherent to tea are impaired. There is also such a risk that when a tea extract is subjected to purification treatment after addition of a sweetener, the sweetener becomes detrimental to the purification. As such, the methods that reduce acrid taste with a sweetener or the like have their own limits.

Patent Document 1: JP-A-60-156614
Patent Document 2: JP-A-3-133928
Patent Document 3: JP-A-59-219384
Patent Document 4: JP-A-2006-223104
Patent Document 5: JP-A-2006-238828
Patent Document 6: WO-A-2004/060077
Patent Document 7: JP-A-2004-73057
Patent Document 8: JP-A-2004-159641

JP 2007 104967 A relates to a refined refined green tea extract which is obtained by (a) a process of mixing a green tea extract containing 25-40 mass% of nonpolymerized catechins with 50-99 mass% of an ethanol aqueous solution, and bringing the mixture into contact with at least one kind selected from activated carbon, acid white clay, and activated clay, and (b) a process of treating the product with tannase. The refined green tea extract has 35-55 mass% of nonpolymerized catechin gallate body ratio in nonpolymerized catechins, and 0.001-0.09 of a mass ratio of caffeine to nonpolymerized catechins. JP 2005 130809 A relates to an astringency removing treatment method for the tea beverage decreased in astringency without destroying deliciousness and body, which comprises subjecting a tea extract to tannase treatment in a condition of containing high concentration catechin.

JP 10 290667 A relates to a method for producing a clear green tea beverage which comprises a green tea extracting process, a process for removing used tea leaves and a turbid component eliminating process. First, the green tea extracting process extracts green tea by boiling green tea leaves containing 5-50% of green tea leaves of the highest quality using warm water at 50-70 °C for 5-15 minutes. In the process for removing used tea leaves, the extracted solution of green tea is successively passed through a filter of 10-30 meshes and a filter of 100-200 meshes to remove used tea leaves from the extracted solution of green tea. In the final turbid component eliminating process, the extracted solution of green tea after the removal of used tea leaves is cooled to about 10 °C, centrifuged at a fixed velocity in a promoted state of precipitation of a turbid component to recover the objective cleared extracted solution of green tea.

JP 2003 199495 A relates to tea beverage which is obtained by the following steps; an extraction step obtaining the extract solution from tea, a step removing the residual tea leaves of the extraction by centrifugal filtration, multiple filtrating steps for filtration of the liquid obtained by the centrifugal filtration, and the multiple filtrating steps comprises a preliminary surface filtration step using a filter paper or a filter cloth and a later filtration step filtrating substance with particle size $\leq 1$ $\mu$m contained in the extraction liquid by utilizing a multi-layer filtration system.

JP 05 049401 A relates to a tea beverage ensured to preserve its quality such as flavor for a long period of time by treating a tea leaf extract liquor within a specified temperature range under a specified pressure to control the change in the chemical components due to heat. Specifically, a liquor is obtained by extracting tea leaves is treated at 60-100 °C under a pressure of ≥300MPa for preferably ≥20min. JP 06 311846 A relates to a method for producing a tea beverage wherein a pressure of about ≥3000 atm is applied to a tea extract solution at a temperature within the range of about 40-90 °C to heat the extract solution for ≥10min. The resultant extract solution is then heat-treated at a temperature within the range of about 100-110 °C for about 5 min to afford the tea beverage.

JP 2006 340646 A relates to a packaged tea which contains quinic acid-5-gallate as (A) component and aluminum as (B) component at the weight ratio of [(A)/(8)] of 0.30 to 23.

JP 2004 147606 A relates to a green tea drink which is obtained by a process of obtaining green tea extract through extracting green tea components from a green tea material and a process of subjecting the green tea extract obtained by the process to heating sterilization treatment to bring the product to the green tea drink. The production processes of the green tea drink comprise also an enzymatic treatment process for transforming glycoside contained in unheated green tea extraction into a flavor component compound by addition of a glycoside splitting enzyme before the heating sterilization treatment process for the green tea extract.

US 2006/263454 A1 relates to a process for producing a purified product of green tea extract, which includes subjecting an aqueous solution of green tea extract to solid-liquid separation by filtration and/or centrifugal separation to obtain another aqueous solution of green tea extract, said another aqueous solution having a turbidity of from 0.2 to 2.0 as measured with a concentration of non-polymer catechins in it adjusted to 1 wt %, and then allowing the another aqueous solution of green tea extract to pass through a polymer membrane having a membrane pore size of from 0.05 to 0.8 μm such that the turbidity of the another aqueous solution of green tea extract is reduced to lower than 0.2 as measured with a concentration of non-polymer catechins in it adjusted to 1 wt %.

**Disclosure of the Invention**

The present invention provides the following production process of tea extracts:

(1) A process for producing a tea extract, which includes subjecting a first tea extract solution, which has been obtained from tea, to solid-liquid separation so that a turbidity becomes 200 NTU or lower when a concentration of non-polymer catechins is adjusted to 1 wt%, thereby obtaining a second tea extract solution in which a concentration of non-polymer catechins is from 0.2 to 5 wt% and a concentration of non-polymer catechins in solid content is from 15 to 80 wt%; and then subjecting the second tea extract solution to a heat treatment at a temperature of from 95 to 140°C for an F value of from 0.05 to 40 min.

The present invention also provides tea extracts obtained by the above-described production process.

In addition, the present invention also provides the following production processes of tea extracts:

(2) A process for producing a packaged beverage, which includes a step of subjecting a mixture, which contains a tea extract obtained by one of the above-described production processes, to a heat treatment under conditions including a temperature of from 80°C to 138°C and an F value of from 0.001 to 40 min after filling in a package.

(3) The process for producing a packaged beverage according to (1), wherein the mixture being subjected to heat treatment comprises a purified green tea extract which has been subjected to a heat treatment under conditions including a temperature of 80°C or higher but lower than 130°C and an F value of 0.1 min or longer but shorter than 10 min.

(4) The process for producing a packaged beverage according to (1), wherein the mixture being subjected to head treatment comprises a purified product of green tea extract that has been subjected to a heat treatment under conditions including a temperature of 80°C or higher but lower than 130°C and an F value of 0.1 min or longer but shorter than 10 min;

Furthermore, the present invention also provides packaged beverages obtained by the above-described production processes (2)-(4).

**Brief Description of the Drawings**

FIG.. 1 is a diagram showing relationships between heating conditions for tea extracts and their tastes and flavors.

**Preferred Embodiments of the Invention**

Purposes of the present invention are to provide processes for producing tea extracts or packaged beverages having reduced acrid taste, and also tea extracts and packaged beverages obtained by the production processes.

The present inventors have found that taste and/or flavor vary depending on the states of turbidity of a tea extract obtained from tea and the conditions for its heat treatment. Upon their further detailed investigation, the present inventors have found that a tea extract having reduced acrid taste can be obtained by subjecting a tea extract, which has been obtained from tea, to a heat treatment under specific conditions. The present inventors have also found that a tea extract with more surely reduced acrid taste can be obtained by subjecting a tea extract, which has been obtained from tea, to a heat treatment under specific conditions after adjusting its concentration of non-polymer catechins by subjecting it to solid-liquid separation under specific conditions.

According to the present invention, a tea extract with reduced acrid taste can be produced easily and conveniently. Especially, when the tea extract is treated by specific solid-liquid separation before the heat treatment, sparingly water-soluble components such as oxalic acid, proteins, fibers and lipids can be selectively and efficiently eliminated, thereby making it possible to easily and conveniently obtain a tea extract with not only acrid taste but also bitterness and an abnormal heated smell being reduced more surely.

As mentioned above, the tea extracts according to the present invention are reduced not only in acrid taste but also in bitterness and abnormal heated smell, and moreover, contain non-polymer catechins in high concentration. These tea extracts are, therefore, useful as materials for the production of tea-based or non-tea-based, packaged beverages that permit the readily ingestion of catechins in a large amount. Accordingly, the use of the tea extracts according to the present invention make it possible to obtain a packaged beverage rid of unpleasant acrid taste in a simple and easy way.

The term "non-polymer catechins (A)" as used herein is a generic term, which collectively encompasses non-epi-form catechins such as catechin, gallocatechin, catechin gallate and gallocatechin gallate, and epi-formechins such as epicatechin, epigallocatechin, epicatechin gallate and epigallocatechin gallate. The concentration of non-polymer catechins is defined based on the total amount of the above-described eight non-polymer catechins. Further, the term "percentage of non-epi forms" indicates the percentage value of a total weight of the four non-epicatechins based on a total weight of the above-described eight non-polymer catechins.

The term "gallate forms of non-polymer catechins" is a generic term, which collectively encompasses the four gallates of catechin gallate, gallocatechin gallate, epicatechin gallate and epigallocatechin gallate, and the term "percentage of gallates in non-polymer catechins" indicates the percentage value of a total weight of the four gallates based on a total weight of the above-described eight non-polymer catechins.


(Production Process of Tea Extract)

The first tea extract solution for use in the present invention is an extract obtained from tea, and contains one or more non-polymer catechins. As the tea for use in extraction, an unfermented tea, semi-fermented tea or fermented tea can be mentioned depending upon the degree of fermentation. Unfermented teas include green teas such as *sencha, bancha, gyokuro, tencha* and *kamairicha* manufactured from teas obtained from tea leaves of the Genus Camellia, for example, *C. sinensis, C. assamica,* the Yabukita variety, or a hybrid thereof. Semi-fermented teas and fermented teas include black tea, oolong tea, pu-erh tea and the like manufactured from tea leaves, which are obtained from tea leaves of the Genus Camellia, for example, *C. sinensis, C. assamica,* the Yabukita variety, or a hybrid thereof, via a semi-fermentation or fermentation step. Of these, preferred are unfermented teas containing non-polymer catechins in high proportion.

In the present invention, it is possible to use not only leaf teas but also stalk teas, stem teas and bud teas. The stalk teas can be those manufactured from stalk parts of tea and generally employed as stalk tea. The stem teas include those manufactured from stem and stalk parts and generally employed as stem tea. The bud teas include those manufactured from soft bud parts not grown yet into leaves are generally employed as bud tea.

Using water as an extraction solvent, the extraction from tea can be conducted by any one of the known methods such as kneader extraction, agitation extraction (batchwise extraction) and countercurrent extraction (drip extraction). An organic acid such as ascorbic acid or its sodium salt or its salt may be added beforehand in water upon extraction. It is also possible to make combined use of a method that conducts extraction while eliminating dissolved oxygen by boiling deaeration or bubbling of an inert gas such as nitrogen gas, that is, under a so-called non-oxidizing atmosphere.

The extraction is conducted generally at 100°C or lower, preferably at from 50 to 95°C, more preferably at from 60 to 90°C, even more preferably at from 65 to 90°C. The adoption of such a temperature condition makes it possible to obtain a tea extract of reduced coarse taste with a high recovery rate.

The amount of water to be used in the extraction may be preferably from 5 to 40 times by weight, more preferably from 5 to 25 times by weight relative to the tea. The extraction time may be preferably from 1 to 120 min or so, more preferably from 1 to 100 min, even more preferably from 1 to 80 min although it depends on the extraction method and the operation scale upon conducting the extraction. The water to be used can be chosen from tap water, distilled water, deionized water or the like as desired, although deionized water is preferred from the standpoint of taste.

As the tea extract in the present invention, it is possible to employ a concentrated tea extract in a form that it is diluted or dissolved with water or to employ a tea extract from tea and a dilution or solution of the concentrate in combination. The term "a concentrated extract" as used herein means a concentrated extract obtained from tea with hot water or a water-soluble organic solvent, and includes, for example, those prepared by the processes disclosed in JP-A-59-219384, JP-A-4-20589, JP-A-5-260907, JP-A-5-306279 and the like. As commercially-available concentrated tea extract, commercial products such as "POLYPHENON" (product of Tokyo Food Techno Co., Ltd.), "TEAFURAN" (product of ITO EN, LTD.) and "SUNPHENON" (product of Taiyo Kagaku Co., Ltd.) may be used.

The tea extract obtained as described above is next subjected to a heat treatment to eliminate unpleasant acrid taste. Upon drinking tea extracts, acrid taste different frombitterness maybe sensed in some instances. Acrid taste is generally considered to be attributable to oxalic acid, proteins and fibers as tea components, although this remains uncertain. The present inventors found that acrid taste can be eliminated from a tea extract by applying the below-described heat treatment to it.

Conditions for the heat treatment are described next. Specifically, the heating temperature is 80°C or higher but lower than 130°C, but from the viewpoint of taste and flavor, the lower limit of the heating temperature may be preferably 85°C, more preferably 90°C or higher, while its upper limit may be preferably 120°C or lower, more preferably 110°C or lower.

On the other hand, the F value is 0.1 min or longer, with 1 min or longer being preferred and 3 min or longer being more preferred. On the other hand, the upper limit of the F value is 10 min or shorter, with 8 min or shorter being preferred and 6 minor shorter be ing more preferred.

By sterilizing under such conditions, the acrid taste of a tea extract can be sufficiently eliminated.

It is to be noted that the term "F value" as used herein is employed as an index expressing heat sterilizationeffects, isavalue (unit: min) equivalent to sterilization effects at a heating temperature of 121. 1°C, and specifically, is a value calculated by the below-described formula.

$$F = \left( 10^{\frac{t-121.1}{Z}} \right) \times \frac{sec}{60}$$

where Z indicates a constant of 10, t represents a heating temperature (°C), and sec represents a heating time (sec).

In the present invention, it is also possible to produce a tea extract of reduced acrid taste by a process to be described hereinafter. Namely, a tea extract (first tea extract solution) is first subjected to solid-liquid separation. As a result, the tea extract is separated into solid components and water-soluble components. In the present invention, these water-soluble components are used as a second tea extract solution. The first tea extract solution is subjected to solid-liquid separation such that, when the second tea extract solution is formed into an aqueous solution containing non-polymer catechins at 1 wt%, the aqueous solution has a turbidity of 200 NTU or lower. Although the turbidity of the aqueous solution is 200 NTU or lower, 150 NTU or lower is preferred with 100 NTU or lower being more preferred. When the turbidity is decreased to 200 NTU or lower as described above, acrid taste can be effectively reduced. It is to be noted that the lower limit of the turbidity may be preferably 0.01 NTU or higher, more preferably 0.1 NTU or higher from the standpoint of the stability of the tea extract. The term "turbidity" as used herein means one obtained by measuring at a wavelength range of 850 nm with a turbidimeter in accordance with the 90° transmitted/scattered light comparison method after diluting the second tea extract solution, which has been obtained by solid-liquid separation, with deionized water such that the concentration of non-polymer catechins in the tea extract is decreased to 1 wt%.

As a solid-liquid separation means, membrane processing, filtration, centrifugal separation or the like can be adopted for example. Of these, membrane processing, especially microfiltration (MF) is preferred in that it facilitates tomore surely eliminate sparingly water-soluble components and to adjust the turbidity to a desired turbidity. It is also preferred to separate the first tea extract solution into solid components and water-soluble components by filtration and/or centrifugal separation before conducting membrane processing, because in the subsequent membrane processing, the filtration rate is improved to achieve excellent production efficiency.

Conditions for the solid-liquid separation canbe set, for example, as will be described hereinafter. Upon conducting membrane processing, the temperature may be preferably from 5 to 70°C, more preferably from 10 to 60°C. The pressure may, for example, be preferably from 30 to 400 pKa, more preferably from 50 to 400 kPa, even more preferably from 50 to 350 kPa. The membrane pore size may be preferably from 0.1 to 0.8 $\mu$m, more preferably from 0.1 to 0.45 $\mu$m, even more preferably from 0.1 to 0.25 $\mu$m in that the turbidity can be easily and conveniently adjusted to a predetermined level. As a measuring method of the membrane pore size, a general measuring method making use of mercury intrusion porosimetry, the bubble point test, bacterial filtration porosimetry or the like can be mentioned. It is, however, preferred to use a value determined by the bubble point test.

Membranes usable in the present invention include, for example, hydrocarbons, fluorinated hydrocarbons or sulfones polymer membranes and ceramic membranes. Examples of the hydrocarbon polymer membranes include polyolefin polymer membranes, specifically polyethylene membranes, polypropylene membranes, and the like. Examples of the fluorinated hydrocarbon polymer membranes include fluorinated polyolefin membranes, specifically polytetrafluoroethylene (PTFE) membranes, polyvinylidene difluoride (PVDF) membranes, and the like. Examples of the sulfone polymer membranes include polysulfone (PSU) membranes and polyether sulfone (PES) membranes. Examples of the ceramic membranes include "CEFILT" (product of NGK Insulators, Ltd.) and "SCUMASIV" (product of Pall Corporation). Among these, the ceramic membranes are preferred in that their pore distributions are sharp and they are excellent in filtration accuracy. As kinds of membranes, flat membranes, spiral membranes, hollow fiber membranes and monolithic membranes can be mentioned. Of these, continuous processing membranes such as spiral membranes, hollow fiber membranes and monolithic membranes are preferred in that efficient processing can be performed.

For centrifugal separation, use of conventional equipment such as a separation-plate-type centrifugator, cylinder-type centrifugator or decanter-type centrifugator is preferred. As conditions for centrifugal separation, the temperature can be preferably from 5 to 70°C, more preferably from 10 to 40°C. In the case of a separation-plate-type centrifugator, for example, the rotational speed and time may be preferably from 4,000 to 10,000 rpm, more preferably from 5,000 to 10,000 rpm, still more preferably from 6,000 to 10,000 rpm, and preferably from 0.2 to 30 min, more preferably from 0.2 to 20 min, even more preferably from 0.2 to 15 min.

Filtration is generally conducted in combination with another solid-liquid separation method for the purpose of coarse filtration. For example, filter separation by filter paper, a filter made of a metal such as stainless steel, or the like can be adopted. The mesh size of such a metal-made filter may be preferably from 18 to 300 mesh.

In the second tea extract solution obtained by the solid-liquid separation, the concentration of non-polymer catechins (A) is from 0.2 to 5 wt%, and the concentration of non-polymer catechins in solid content is from 15 to 80 wt%. To provide the tea extract with such properties, the second extract may be concentrated by partly removing water from it as needed. From the viewpoint of preventing an increase in coloration by heat treatment, the concentration of non-polymer catechins (A) may be preferably from 0.2 to 4 wt%, more preferably from 0.2 to 3 wt%. From the viewpoint of reducing acrid taste to be produced by the heat treatment, the concentration of non-polymer catechins in solid content may be preferably from 20 to 70 wt%, more preferably from 25 to 50 wt%.

The second tea extract solution is then subjected to heat treatment. Conditions for the heat treatment include a temperature of from 95 to 140°C and an F value of from 0.05 to 40 min. The heating temperature may be preferably from 98 to 135°C, more preferably from 100 to 130°C. On the other hand, the F value may be preferably from 0.07 to 35 min, more preferably from 0.07 to 30 min. If the heating temperature and F value are equal to or higher or greater than the lower limits, acrid taste can be efficiently reduced by heat treatment. If the heating temperature and F value are equal to or higher or greater than the upper limits, on the other hand, an abnormal smell by heating can be reduced to obtain a tea extract having a good taste and flavor.

In the present invention, the second tea extract solution or the tea extract obtained by applying the heat treatment can be treated with an enzyme having tannase activity to reduce its bitterness and astringency. It is, however, preferred to treat the second tea extract solution with tannase before the heat treatment.

Any tannase can be used here insofar as it has activity to hydrolyze gallate-form non-polymer catechin gallates. Specifically, tannase obtainable by culturing a tannase-producing fungus of the *Aspergillus, Penicillium* or *Rhizopus* genus can be used. Preferred is tannase available from *Aspergillus oryzae.*

In the tannase treatment, it is preferred to add tannase, which is in the form of a powder or solution, to the second tea extract solution to give a concentration of from 25 to 500 Unit/L, with from 50 to 150 Unit/L being preferred. Such an added amount of tannase is 0.1 Unit or more, preferably 0.2 Unit or more per gram of a tea extract in which the concentration of non-polymer catechins is 0.67 wt%. It is to be noted that "1 Unit" in defined to be an amount of enzyme that hydrolyzes 1 micromole of ester bonds, which are contained in tannic acid, in water of 30°C.

It is preferred to hold the second tea extract solution at from 20 to 50°C, desirably from 20 t0 40°C after the addition of the enzyme having tannase activity until the percentage of gallate forms (B) in the non-polymer catechins reaches 1 to 60 wt%. In this case, the percentage of gallate forms (B) in the non-polymer catechins may be adjusted preferably to from 3 to 55 wt%, more preferably to from 5 to 50 wt%. Subsequently, the temperature is raised to the above-described heating temperature as promptly as possible, at which the heat treatment is then conducted for the F value such that tannase is inactivated to terminate the reaction. As a consequence, reductions in bitterness and astringency by the tannase treatment and a reduction in acrid taste by the heat treatment can be realized at the same time. A tea extract having still reduced acrid taste and a good color tone can, therefore, be obtained while assuring simplification of production steps and a reduction in working cost. Further, a tea extract having an intended percentage of gallate forms can be simply and conveniently obtained, because the inactivation treatment of tannase can prevent a subsequent decrease in the percentage of gallate forms.

The tea extract according to the present invention can be produced as described above. Further, the tea extract so obtained can be concentrated or dried into a high-concentration form such as a solid, a powder or granules.' As the high-concentration method by concentration or drying, reduced-pressure concentration, reverse osmosis membrane concentration, spray drying or lyophilization can be mentioned, for example. Two or more of these methods may be practiced in combination. Of these, reduced-pressure concentration or spray drying is preferred in that the thermal history is less severe. Reverse osmosis membrane concentration is preferred in that the thermal history is moderate and the energy can be saved. As an illustrative efficient high-concentration method, primary concentration is first conducted to a solid concentration of from 30 to 60 wt% by reduced-pressure concentration or reverse osmosis membrane concentration, and depending on the application, powderization is then conducted by spray drying or lyophilization.

Further, the tea extract according to the present invention can be dispersed in a mixed solution of an organic solvent and water and then subjected to contact treatment with activated carbon and acid clay or activated clay. This treatment makes it possible to obtain a tea extract, which is still better in stability with time and has high quality and low caffeine content despite non-polymer catechins are contained at high concentration.

From the standpoints of the extraction efficiency of non-polymer catechins, the purification of the tea extract, long-term drinkability and the like, the content weight ratio of the organic solvent to water may be set preferably at from 60/40 to 97/3, more preferably at from 60/40 to 95/5, even more preferably at from 85/15 to 95/5.

The organic solvent can be an alcohol such as ethanol or methanol, a ketone such as acetone, or an ester such as ethyl acetate. Among these, hydrophilic organic solvents such as alcohols and ketones are preferred. In view of use in beverages or foods, alcohols are more preferred, with ethanol being still more preferred. The water can be deionized water, tap water, natural water or the like. These organic solvent and water may preferably be added to the tea extract after combining them into a mixed solution, although they may be mixed at the same time or separately in the filtered tea extract.

The proportion (in terms of a dry weight) of the tea extract to be used may be preferably from 10 to 40 weight parts, more preferably from 10 to 30 weight parts, still more preferably from 15 to 30 weight parts per 100 weight parts of the mixed solution of the organic solvent and water in that the tea extract can be efficiently treated.

It is preferred to include an aging time of from 10 to 180 min or so after the completion of the addition of the mixed solution of the organic solvent and water. Such treatment can be conducted at from 10 to 60°C, preferably at from 10 to 50°C, more preferably at from 10 to 40°C.

The activated carbon can be added preferably in a proportion of from 0.5 to 8 weight parts, more preferably from 0.5 to 3 weight parts per 100 weight parts of the mixed solution of the organic solvent and water because of the elimination efficiency of caffeine and smaller cake resistance in the filtration step. Further, the adding ratio of the activated carbon to the acid clay or activated clay may be preferably from 1 to 10, more preferably from 1 to 6 of the acid clay or activated clay to 1 of the activated carbon by weight.

In the tea extract produced as described above, the weight ratio [(C)/(A)] of non-polymer catechins (A) to caffeine (C) can be set at from 0.005 to 0.25, from 0.005 to 0.07, or even from 0.005 to 0.04.

The tea extract according to the present invention, despite reduced acrid taste, bitterness and abnormal heated smell, retains a high concentration of non-polymer catechins and is also excellent in stability when added to a beverage. Therefore, the tea extract according to the present invention is useful as a material for a packaged beverage, and can be formulated, for example, into a tea-based beverage or non-tea-based beverage. Examples of the tea-based beverage include unfermented tea beverages such as green tea beverage, semi-fermented tea beverages such as oolong tea beverages, fermented tea beverages such as black tea beverages, barley teas, and blended teas. Examples of the non-tea-based beverages include enhanced waters, bottled waters, sports drinks, isotonic beverages, near waters, and the like, and also include carbonated beverages. Each carbonated beverage can be obtained, for example, by adding a lemon-lime flavor, citrus flavor, cola flavor or the like and filling carbonic acid at a gas pressure of from 1 to 4 kg/cm$^3$ in a pressure-resistant package.

(Production Process of Packaged Beverage)

The process of the present invention for the production of a packaged beverage is characterized by including a step of subjecting a mixture (beverage composition), which has been obtained by adding one or more of the below-described additives to the tea extract obtained by the above-described production process or the heat-treated purified product of green tea extract as needed, to heat treatment under conditions including a temperature of from 80 to 138°C and an F value of from 0.001 to 40 min. The heat treatment in this step is to conduct sterilization treatment such that the mixture can be finished into a commercial beverage form.

In the present invention, the heat-treated purified product of green tea extract may be added to the green tea extract, which has been obtained by the above-described production process, to adjust the concentration of non-polymer catechins, and further, one or more additives may be added to provide a mixture (beverage composition) as needed. This procedure facilitates the preparation of a packaged beverage containing non-polymer catechins at high concentration. As an illustrative adding method, the heat-treated tea extract is added to an aqueous solution of the heat-treated purified product of green tea extract or to the heat-treated purified product of green tea extract. It is to be noted that as the heat-treated purified product of green tea extract, the use of one obtained by subjecting a green tea extract or the like to heat treatment subsequent to its purification is preferred from the viewpoint of a reduction in acrid taste although one obtained by purifying a green tea extract or the like subsequent to its heat treatment may also be used.

As the purified product of green tea extract, one obtained by extracting green tea leaves with hot water, partly removing water from the resulting solution and then purifying the solution or one having a concentration of non-polymer catechins increased by conducting purification can be used, or a commercially-available, purified product of green tea extract may be used. Forms of the purified product of green tea extract include various forms such as solid, aqueous solution and slurry.

As the purified product of green tea extract, one having a percentage of gallate forms lowered in non-polymer catechins by treatment with an enzyme having tannase activity may also be used. For this tannase treatment, it is preferred to add tannase such that its proportion falls within a range of from 0.5 to 10 wt% based on the non-polymer catechins in the purified product of green tea extract. The temperature of the tannase treatment may be preferably from 15 to 40°C at which its enzyme activity is available, with from 20 to 30°C being more preferred. At the time of the tannase treatment, the pH may be preferably from 4 to 6 at which its enzyme activity is available, with from 4.5 to 6 being more preferred, and from 5 to 6 being still more preferred.

Conditions for the heat treatment of the purified product of green tea extract are as will be described hereinafter. The heating temperature is 80°C or higher but lower than 130°C, but from 85 to 120°C is preferred, with from 90 to 110°C being more preferred. On the other hand, the F value is 0.1 min or longer but shorter than 10 min, but 0.5 min or longer but shorter than 8 min is preferred, with 1 min or longer but shorter than 6 min being more preferred. These conditions make it possible to reduce the acrid taste of the purified product of green tea extract.

As a heat treatment method for the mixture (beverage composition), on the other hand, a method commonly practiced in the production of beverages, that is, UHT sterilization, retort sterilization or the like can be adopted. In the present invention, the sterilization treatment may preferably be conducted by changing the F value in accordance with the pH of the packaged beverage because the resistance of bacteria differs depending on the pH of the packaged beverage. Described specifically, in the case of a neutral beverage the pH (25°C) of which is from 5.0 to 6.5, the F value may be preferably from 0.5 to 40 min, more preferably from 5 to 40 min, still more preferably from 10 to 40 min. In the case of an acidic beverage the pH (25°C) of which is from 2.0 to lower than 5.0, the F value may be preferably from 0.001 to 0.5 min, more preferably form 0.001 to 0.1 min from the viewpoint of avoiding deteriorations in taste and flavor which would otherwise occur by heating. The sterilization temperature is from 80 to 138°C irrespective of the properties of the mixture, but from the viewpoint of the taste and flavor after sterilization, may be preferably from 85 to 135°C, more preferably from 90 to 131°C.

The heat treatment is conducted after filling in a package. Described specifically, the heat treatment is conducted under the above-described sterilization conditions after the mixture is filled in a package such as a molded package made of polyethylene terephthalate as a principal component (a so-called PET bottle), metal can or bottle. It is also possible to conduct an operation such that subsequent to heat sterilization under acidic conditions, the pH of the mixture is caused to rise back to neutral under aseptic conditions or that subsequent to heat sterilization under neutral conditions, the pH of the mixture is caused to drop back to the acidic side under aseptic conditions.

The additives include sweeteners, antioxidants, bitterness/astringency suppressors, flavorings, various esters, organic acids, organic acid salts, inorganic acids, inorganic acid salts, inorganic salts, colors, emulsifiers, preservatives, seasoning agents, sour seasonings, gums, emulsifiers, oils, vitamins, amino acids, fruit extracts, vegetable extracts, flower honey extracts, pH regulators, quality stabilizers, and so on. They can be added either singly or in combination.

Examples of the sweeteners include carbohydrates, glycerols, sugar alcohols, and artificial sweeteners. In the packaged beverage, such a sweetener may be added in an amount such that it accounts preferably for from 0.0001 to 20 wt%, more preferably for from 0.001 to 15 wt%, even more preferably for from 0.01 to 10 wt%. The degree of the sweetness of the packaged beverage according to the present invention may preferably be 2 or higher when sucrose is assumed to have a sweetness degree of 1 (References: JIS Z8144, Sensory Evaluation Analysis-Terms, No. 3011, Sweetness; JIS Z9080, Sensory Evaluation Analysis-Methods, Testing Method; Beverage Term Dictionary, 4-2 Classification of Sweetness Degrees, Material 11 (Beverage Japan, Inc.); Property Grading Test mAG Test, ISO 6564-1985 (E), "Sensory Analysis - Methodology-Flavour profile method", etc.). When the degree of sweetness is 8 or higher, on the other hand, it is possible to reduce a feeling of being caught in the throat, and hence to leave an excellent feeling as the beverage passes down through the throat. It is to be noted that these sweeteners include those inherently contained in the tea extract or the like.

Carbohydrate-based sweeteners include, for example, monosaccharides, oligosaccharides, complex polysaccharides, and mixtures thereof. Among these, one or more sweeteners selected from glucose, sucrose, fructose and fructoglucose syrup can be used preferably.

Examples of the monosaccharides include glucose, fructose and the like. In the packaged beverage, glucose may be added in an amount such that it accounts for from 0.0001 to 20 wt%, more preferably for from 0.001 to 15 wt%, still more preferably for from 0.01 to 10 wt%. In the packaged beverage, fructose may be added in an amount such that it accounts preferably for from 0.0001 to 20 wt%, more preferably for from 0.001 to 15 wt%, still more preferably for from 0.01 to 10 wt%. In the packaged beverage, fructoglucose syrup may be added in an amount such that it accounts preferably for from 0.01 to 7 wt%, more preferably for from 0.1 to 6 wt%, still more preferably for from 1.0 to 5 wt%. Coloration due to browning hardly takes place during the storage of the beverage when the total amount of these sweeteners is 20 wt% or less.

Examples of the oligosaccharides include sucrose (saccharose), malt dextrin, corn syrup, high-fructose corn syrup, agape extract, maple syrup, sugarcane, honey and the like. Sucrose is preferred as an oligosaccharide. In the packaged beverage, sucrose may be added in an amount such that it accounts preferably for from 0.001 to 20 wt%, more preferably for from 0.01 to 15 wt%, still more preferably for from 0.1 to 10 wt%.

A preferred example of complex polysaccharide is malt dextrin. In addition, carbohydrate derivatives, polyhydric alcohols, for example, glycerols can also be used in the present invention.

Examples of the sugar alcohols include erythritol, sorbitol, xylitol, trehalose, maltitol, lactitol, palatinose, mannitol, tagatose and the like. Among these, erythritol is preferred as it has no calorific value.

Examples of the sweeteners include high-sweetness sweeteners such as aspartame, sucralose, saccharin, cyclamate, acesulfame-K, L-aspartyl-L-phenylalanine lower alkyl ester, L-aspartyl-D-alanine amide, L-aspartyl-D-serine amide, L-aspartyl-hydroxymethylalkanamide, L-aspartyl-1-hydroxyethylalkanamide and sucralose, glycyrrhizin, and synthetic alkoxyaromatic compounds. Further, thaumatin, stevioside and other natural-source sweeteners are also usable.

In the packaged beverage, sodium and/or potassium canbe added as electrolyte (s). The total concentration of sodium and potassium may preferably be from 0.001 to 0.5 wt%. Within this range, the packaged beverage is good in taste, and is preferred for long-term drinking.

As illustrative sodium, a sodium salt such as sodium ascorbate, sodium chloride, sodium carbonate, sodium hydrogencarbonate, sodium citrate, sodium phosphate, sodium hydrogenphosphate, sodium tartrate, sodium benzoate or the like, or a mixture thereof can be added. The sodium includes that originated from an added fruit extract or that contained as an ingredient in tea. The degree of coloration of the beverage increases when the concentration of sodium is excessively high. From the viewpoint of the stability of the product, sodium may, therefore, be added in the packaged beverage to such an amount that it accounts preferably for from 0.001 to 0.5 wt%, more preferably for from 0.002 to 0.4 wt%, even more preferably for from 0.003 to 0.2 wt%.

As illustrative potassium, a potassium salt such as potassium chloride, potassium carbonate, potassium sulfate, potassium acetate, potassium hydrogencarbonate, potassium citrate, potassium phosphate, potassium hydrogenphosphate, potassium tartrate, potassium solbate or the like, or a mixture thereof may be added. The potassium includes that originated from a fruit extract or flavoring. Compared with the concentration of sodium, the concentration of potassium gives a greater effect on the color tone during long-term high-temperature storage. From the viewpoint of stability, potassium may be added in the packaged beverage to an amount such that it accounts preferably for from 0.001 to 0.2 wt%, more preferably for from 0.002 to 0.15 wt%, even more preferably for from 0.003 to 0.12 wt%.

A sour seasoning can be, for example, one or more sour seasonings selected from ascorbic acid, citric acid, gluconic acid, succinic acid, tartaric acid, lactic acid, fumaric acid, phosphoric acid, malic acid, and their sodium salts and potassium salts.

Examples of the inorganic acids and inorganic acid salts include diammonium hydrogenphosphate, ammonium dihydrogenphosphate, dipotassium hydrogenphosphate, disodium hydrogenphosphate, sodium dihydrogenphosphate, trisodium metaphosphate, tripotassium phosphate, and the like. In the packaged beverage, such an inorganic acid or inorganic acid salts maybe added in an amount such that it accounts preferably for from 0.01 to 0.5 wt%, more preferably for from 0.02 to 0.3 wt%.

One or more of flavorings (flavors) and fruit extracts (fruit juices) may be added to the packaged beverage according to the present invention with a view to improving its taste. For example, natural or synthetic flavorings and fruit extracts can be used in the present invention. They can be selected from fruit juices, fruit flavors, plant flavors, and mixtures thereof. For example, a combination of a fruit juice with a tea flavor, preferably a green tea or black tea flavor is preferred. Preferred usable fruit extracts include apple, pear, lemon, lime, mandarin, grapefruit, cranberry, orange, strawberry, grape, kiwi, pineapple, passion fruit, mango, guava, raspberry, and cherry juices. Among these, more preferred are citrus juices (preferably, grapefruit, orange, lemon, lime and mandarin), mango juice, passion fruit juice, guava juice, and mixtures thereof. Preferred natural flavors include jasmine, chamomile, rose, peppermint, *Crataegus cuneata*, chrysanthemum, water caltrop, sugarcane, bracket fungus of the genus Fomes (*Fomes japonicus*), bamboo shoot, and the like. In the packaged beverage, such a fruit extract may be added in an amount that it account preferably for from 0.001 to 20 wt%, more preferably for from 0.002 to 10 wt%.

Still more preferred flavorings are citrus flavors including orange flavor, lemon flavor, lime flavor and grapefruit flavor. In place of such citrus flavors, various other fruit flavors such as apple flavor, grape flavor, raspberry flavor, cranberry flavor, cherry flavor and pineapple flavor are also usable. These flavors can be derived from natural sources such as fruit extracts and balms, or can be synthesized. The flavorings can also include blends of various flavors, for example, a blend of lemon and lime flavors and blends of citrus flavors and selected spices (typically, cola and soft drink flavors). In the packaged beverage, such a flavoring may be added in an amount such that it accounts preferably for from 0.0001 to 5 wt%, more preferably for from 0.001 to 3 wt%.

As vitamins, vitamin A, vitamin B and vitamin E can be added preferably. Other vitamins such as vitamin D may also be added. As vitamin B, there can be mentioned, for example, a vitamin B complex selected from inositol, thiamine hydrochloride, thiamine nitrate, riboflavin, riboflavin 5'-phosphate sodium, niacin, nicotinamide, calcium pantothenate, pyridoxy hydrochloride and cyanocobalamin. Folic acid and biotin can also be used in the packaged beverage according to the present invention. These vitamins can each be added preferably in an amount of at least 10 wt% of its daily requirement (U.S. RDI Standards, described in US 2005/0003068: U.S. Reference Daily Intake) per package.

Examples of the minerals include calcium, chromium, copper, fluorine, iodine, iron, magnesium, manganese, phosphorus, selenium, silicon, molybdenum, zinc, and the like. Preferred minerals are magnesium, phosphorus and iron.

A cyclodextrin can also be added to suppress the bitterness of non-polymer catechins. Examples of the cyclodextrin include α-cyclodextrins, β-cyclodextrins and γ-cyclodextrins.

The packaged beverage according to the present invention is obtained as described above. The lower limit of the content of the non-polymer catechins (A) in the packaged beverage may be preferably 0.03 wt%, more preferably 0.04 wt%, more preferably 0.05 wt%, more preferably 0.06 wt%, more preferably 0.08 wt%, even more preferably 0.1 wt%, while its upper limit may be preferably 1.0 wt%, more preferably 0.5 wt%, more preferably 0.4 wt%, more preferably 0.3 wt%, more preferably 0.25 wt%, even more preferably 0.2 wt%. The above-described range is preferred in that, when the content of non-polymer catechins falls within the range, a large amount of catechins can be readily ingested and the taste and flavor do not change much.

Further, the percentage of gallate forms (B) in the non-polymer catechins may be preferably from 5 to 50 wt%, more preferably from 30 to 50 wt%, even more preferably from 40 to 50 wt%.

In addition, the concentration of gallate forms in the non-polymer catechin gallates in the packaged beverage according to the present invention may preferably be in a range of from 30 to 100 mg/100 mL as the packaged beverage is improved in aftertaste disappearance.

Moreover, the weight ratio ((C)/(A)) of the caffeine (C) to the non-polymer catechins (A) may be preferably from 0.0001 to 0.16, more preferably from 0.001 to 0.15, more preferably from 0.01 to 0.14, even more preferably from 0.05 to 0.13 wt%. When the ratio of caffeine to non-polymer catechins falls within the above-described range, the taste balance is sufficient. The above-described range is also preferred from the standpoint of the color tone of the beverage. The caffeine can be the caffeine naturally found in the green tea extract, flavor(s), fruit extract(s) and other ingredient(s) used as ingredients, or can be caffeine added newly.

The packaged beverage according to the present invention may preferably have a low calorific value of not greater than 40 kcal/240 mL, with from 2 to 35 kcal/240 mL or lower being more preferred, and from 3 to 30 kcal/240 mL or lower being still more preferred.

From the viewpoints of taste and storage stability, the pH (25°C) of the packaged beverage according to the present invention may be preferably from 2 to 7, more preferably from 2.5 to 6.5, more preferably from 2.8 to 5.0, more preferably from 3.0 to 4.5, even more preferably from 3.8 to 4.2. When the pH falls within the above-described range, non-polymer catechins can be provided with excellent stability during long-term storage. The pH can be adjusted with ascorbic acid or its salt, citric acid or the like to the above-describe range. By this pH adjustment, the beverage can be provided with long-term storability and adequate sourness.

## Examples

(Measurements of non-polymer catechins)

A sample was diluted with deionized water, filtered through a membrane filter (0.8 μm), and then diluted with distilled water. Using a high-performance liquid chromatograph (model: "SCL-10AVP") manufactured by Shimadzu Corporation and fitted with a liquid chromatograph column packed with octadecyl-introduced silica gel, L-Column, TM ODS" (4.6 mm in diameter x 250 mm; product of Chemicals Evaluation and Research Institute, Japan), the sample was measured at a column temperature of 35°C by the gradient elution method. A mobile phase, Solution A, was a solution containing acetic acid at 0.1 mol/L in distilled water, while another mobile phase, Solution B, was a solution containing acetic acid at 0.1 mol/L in acetonitrile. The measurement was conducted under the conditions of 20 μL sample injection volume and 280 nm UV detector wavelength.

Concentration gradient conditions (vol%)

| Time | Mobile phase A | Mobile phase B |
|---|---|---|
| 0 min | 97% | 3% |
| 5 min | 97% | 3% |
| 37 min | 80% | 20% |
| 43 min | 80% | 20% |
| 43.5 min | 0% | 100% |
| 48.5 min | 0% | 100% |
| 49 min | 97% | 3% |
| 62 min | 97% | 3% |

(Measurement of turbidity)

A second tea extract solution which had been obtained by conducting solid-liquid separation was diluted with deionized water such that the concentration of non-polymer catechins was lowered to 1 wt%. Using the thus-diluted second tea extract solution as a sample, a measurement was performed at a wavelength range of 850 nm with a turbidimeter ("TURBIDIMETER/TN-100", manufactured by Eutech Instruments Pte Ltd.) in accordance with the 90° transmitted/scattered light comparison method.

(Evaluation of taste and flavor)

Each tea extract was diluted with deionized water to lower the concentration of non-polymer catechins to 175 mg/100 mL. By five male evaluators, its taste and flavor (acrid taste, bitterness and abnormal heated smell) were evaluated in accordance with the below-described standards. Individual evaluation results were put together after deliberation. The results are shown in Tables 1, 2 and 3.

With respect to each packaged beverage, a drinking test was also performed by a panel of five trained evaluators. An evaluation item was the intensity of acrid taste which still remained after drinking. Individual evaluation results were put together after deliberation. The results are shown in Tables 4 and 5.

(1) Evaluation standards for acrid taste, bitterness and abnormal heated smell of tea extract:

A: Hardly sensed.
B: Somewhat hardly sensed.
C: Slightly sensed.
D: Sensed.

(2) Evaluation standards for acrid taste of packaged beverage:

A: Excellent from the viewpoint of drinking it as a beverage.
B: No problem from the viewpoint of drinking it as a beverage.
C: Slightly inferior as a beverage, but still drinkable.
D: Have an abnormal taste and not suited for drinking.

Example 1

(1) Green tea leaves (produce of Kenya, large leaf variety; 100 g) were stirred and batchwise extracted for 15 min in hot water of 50°C (3 kg) to obtain a first tea extract solution. The first tea extract solution was subjected to coarse filtration through a 70-mesh screen and a 200-mesh screen and was cooled to 25°C. To remove fine powder from the first tea extract solution, a centrifugal separation operation was then performed at 25°C and 8,000 rpm for 10 min by a batchwise centrifugator ("COOLED HIGH-SPEED CENTRIFUGATOR CR22G", manufactured by Hitachi Koki Co. , Ltd.), whereby a second tea extract solution (2,300 g) was obtained.

(2) An aliquot (100 g) of the resultant second tea extract solution was immersed for 9 min in a hot bath set at 100°C.

Subsequent to cooling, the resulting tea extract was freeze-dried by a freeze drier ("FD-81", manufactured by Tokyo Rikakikai Co., Ltd.) to obtain a powdery tea extract.

Example 2

A tea extract was obtained by a similar procedure as in Example 1 except that a first tea extract solution was obtained by extracting green tea leaves (produce of Kenya, large leaf variety; 100 g) in hot water of 80°C.

Example 3

A tea extract was obtained by a similar procedure as in Example 1 except that a first tea extract solution was obtained by extracting green tea leaves (produce of Kenya, large leaf variety; 100 g) in hot water of 90°C.

Example 4

(1) By a similar procedure as in Example 2, green tea leaves (produce of Kenya, large leaf variety; 100 g) were stirred and batchwise extracted for 15 min in hot water of 80°C (3 kg) to obtain a first tea extract solution. The first tea extract solution was subjected to coarse filtration through a 70-mesh screen and a 200-mesh screen and was cooled to 25°C. The first tea extract solution was then subjected to microfiltration (MF processing) at 25°C and an average filtration pressure of 0.1 MPa through a 0.2-$\mu$m ceramic filter ("CEFILT", product of NGK Insulators, Ltd.) to obtain a second extract.
(2) After an aliquot (100 g) of the resultant second tea extract solution was subjected to heat treatment  by a similar procedure as in Example 1, lyophilization was conducted to obtain a powdery tea extract.

Example 5

A tea extract was obtained by a similar procedure as in Example 4 except that a first tea extract solution was obtained by extracting green tea leaves (produce of Kenya, large leaf variety; 100 g) in hot water of 75°C.

Example 6

(1) As in Example 5, batchwise extraction was conducted for 15 min under stirring in hot water of 75°C to obtain a first tea extract solution. The first tea extract solution was subjected to coarse filtration through a 70-mesh screen and a 200-mesh screen and was cooled to 25°C. The first tea extract solution was then subjected to microfiltration (MF processing) at 25°C and an average filtration pressure of 0.1 MPa through a 0.2-$\mu$m ceramic filter ("CEFILT", product of NGK Insulators, Ltd.) to obtain a second extract.
(2) The resultant second tea extract solution was subjected at a flow rate of 110 mL/min to heat treatment by a continuous heat treatment apparatus (heating: oil bath, 2.27 mm (inner diameter) x 10 m, holding zone: 10.7 mm (inner diameter) x 2 m) under conditions of 124°C and a residence time of 1.5 min, followed by cooling to 25°C. The resulting tea extract was then freeze-dried  by a freeze drier to obtain a powdery tea extract.

Example 7

A tea extract was obtained by a similar procedure as in Example 6 except that the heat treatment conditions were changed to 130°C and 1.5 min

Example 8

A tea extract was obtained by a similar procedure as in Example 6 except that the heat treatment conditions were changed to 133°C and 1.5 min.

Example 9

A tea extract was obtained by a similar procedure as in Example 6 except that the heat treatment conditions were changed to 138°C and 0.5 min and a holding zone (10.7 mm (inner diameter) x 0.67 m) was used.

Example 10

The second tea extract solution obtained in Example 4(1) was held at a temperature of 25°C, at which tannase ("TANNASE KTFH", product of Kikkoman Corporation; 500 U/g) was added at 120 ppm (60 Units/L) to the second tea extract solution. After held for 100 min, heat treatment was conducted under the heat treatment conditions described in Example 6. The resulting tea extract was then freeze-dried by a freeze drier to obtain a powdery tea extract.

Comparative Example 1

A tea extract was obtained by a similar procedure as in Example 2 except that the second tea extract solution (100 g) was freeze-dried by the freeze drier without subjecting it to heat treatment.

Comparative Example 2

(1) Green tea leaves (produce of Kenya, large leaf variety; 100 g) were stirred and batchwise extracted for 15 min in hot water of 80°C (3 kg) to obtain a first tea extract solution. Then, the first tea extract solution was subjected to coarse filtration through a 70-mesh screen and a 200-mesh screen, and was cooled to 25°C to obtain a second extract. (2) Afteranaliquot (100 g) of the resultant second tea extract solution was immersed for 9 min in a hot bath set at 100°C and was then cooled, the resulting tea extract was freeze-dried by a freeze drier to obtain a powdery tea extract.

Comparative Example 3

A tea extract was obtained by a similar procedure as in Example 2 except that the centrifugal separation conditions were changed to 3,000 rpm and 10 min.

Comparative Example 4

A tea extract was obtained by a similar procedure as in Example 5 except that the heat treatment conditions were changed to 90°C and 30 min.

Comparative Example 5

A tea extract was obtained by a similar procedure as in Example 5 except that the heat treatment conditions were changed to 100°C and 3 min.

Comparative Example 6

A tea extract was obtained by a similar procedure as in Example 6 except that the heat treatment conditions were changed to 133°C and 3 min.

Comparative Example 7

The second tea extract solution obtained in Example 4(1) was held at a temperature of 25°C, at which tannase ("TANNASE KTFH", product of Kikkoman Corporation; 500 U/g) was added at 120 ppm (60 Units/L) to the second tea extract solution. After held for 100 min, the second tea extract solution was heated to 80°C, at which the second tea extract solution was held for 3 min to inactivate the enzyme. The resulting tea extract was then freeze-dried by a freeze drier to obtain a powdery tea extract.

Analysis results of the tea extracts obtained in Examples 1 to 4 and Comparative Examples 1 to 3 and evaluation results about their tastes and flavors are shown in Table 1.

Analysis results of the tea extracts obtained in Examples 5 to 9 and Comparative Examples 4 to 6 and evaluation results about their tastes and flavors are shown in Table 2.

Analysis results of the tea extracts obtained in Example 10 and Comparative Example 7 and evaluation results about their tastes and flavors are shown in Table 3.

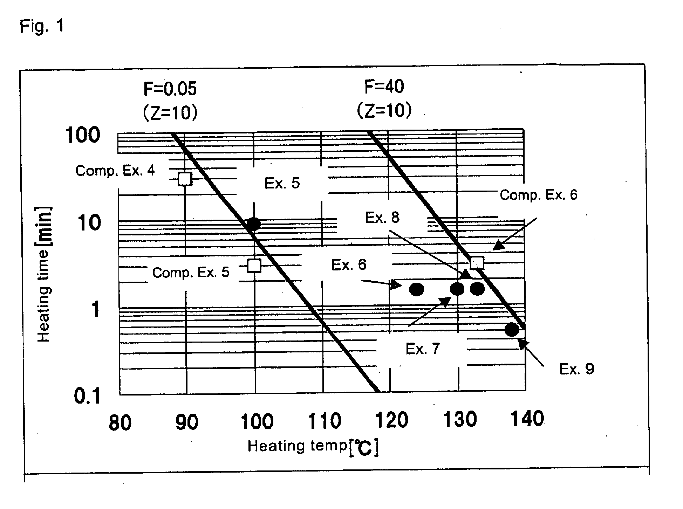

Further, relationships between heating conditions and taste and flavor about the tea extracts obtained in Examples 5 to 9 and Comparative Examples 4 to 6 are shown in FIG. 1.
Table 1

|  |  | Examples | | |
|---|---|---|---|---|
|  |  | 1 | 2 | 3 |
| First tea extract soln. | Extracting temp. (°C) | 50 | 80 | 90 |
|  | Extracting time (min) | 15 | 15 | 15 |
|  | Solid-liquid separation | Centrifugal separation (8,000 rpm, 10 min) | Centrifugal separation (8,000 rpm, 10 min) | Centrifugal separation (8,000 rpm, 10 min) |
| Second tea extract soln. | Turbidity (NTU) | 110 | 107 | 120 |
|  | Percentage of gallate forms (B) (wt%) | 46.9 | 53.0 | 53.7 |
|  | Non-polymer catechins (A) (wt%) | 0.450 | 0.526 | 0.551 |
|  | Percentage of epi-forms in non-polymer catechins (wt%) | 8.6 | 9.1 | 10.8 |
|  | Concentration of non-polymer catechins in solid content (wt%) | 34.4 | 36.7 | 38.0 |
| Heating conditions | Heat treatment | Conducted | Conducted | Conducted |
|  | Heating temp (°C) | 100 | 100 | 100 |
|  | Heating time (min) | 9.0 | 9.0 | 9.0 |
|  | F value (min) | 0.07 | 0.07 | 0.07 |
| Tea extract | Percentage of gallate forms (B) (wt%) | 47.8 | 53.6 | 54.2 |
|  | Non-polymer catechins (A) (wt%) | 0.441 | 0.508 | 0.535 |
|  | Percentage of epi-forms in non-polymer catechins (wt%) | 16.2 | 16.8 | 19.5 |
|  | Acrid taste | B | B | B |
|  | Abnormal heated smell | B | B | B |
|  | Bitterness | B | B | B |

Table 1 (Cont'd)

| | | | Example | Comparative Examples | |
|---|---|---|---|---|---|
| | | | 4 | 1 | 2 |
| First tea extract soln. | | Extracting temp. (°C) | 80 | 80 | 80 |
| | | Extracting time (min) | 15 | 15 | 15 |
| | | Solid-liquid separation | MF processing | Centrifugal separation (8,000 rpm, 10 min) | Coarse filtration (200-mesh screen) only |
| Second tea extract soln. | | Turbidity (NTU) | 1.6 | 107 | 1,603 |
| | | Percentage of gallate forms(B) (wt%) | 52.0 | 53.0 | 53.0 |
| | | Non-polymer catechins(A) (wt%) | 0.478 | 0.526 | 0.530 |
| | | Percentage of epi-forms in non-polymer catechins (wt%) | 9.1 | 9.1 | 9.1 |
| | | Concentration of non-polymer catechins in solid content (wt%) | 37.7 | 36.7 | 35.7 |
| Heating conditions | | Heat treatment | Conducted | Not conducted | Conducted |
| | | Heating temp (°C) | 100 | – | 100 |
| | | Heating time (min) | 9.0 | – | 9.0 |
| | | F value (min) | 0.07 | – | 0.07 |
| Tea extract | | Percentage of gallate forms(B) (wt%) | 52.5 | – | 53.6 |
| | | Non-polymer catechins(A) (wt%) | 0.463 | – | 0.525 |
| | | Percentage of epi-forms in non-polymer catechins (wt%) | 16.8 | – | 16.8 |
| Acrid taste | | | A | D | C |
| Abnormal heated smell | | | B | B | C |
| Bitterness | | | B | B | C |

EP 2 177 108 B1

Table 1 (Cont'd).

| | | Comp. Ex. 3 |
|---|---|---|
| First tea extract soln. | Extracting temp. (°C) | 80 |
| | Extracting time (min) | 15 |
| | Solid-liquid separation | Centrifugal separation (3,000 rpm, 10 min) |
| Second tea extract soln. | Turbidity (NTU) | 319 |
| | Percentage of gallate forms(B) (wt%) | 53.0 |
| | Non-polymer catechins(A) (wt%) | 0.520 |
| | Percentage of epi-forms in non-polymer catechins (wt%) | 9.1 |
| | Concentration of non-polymer catechins in solid content (wt%) | 36.3 |
| Heating conditions | Heat treatment | Conducted |
| | Heating temp (°C) | 100 |
| | Heating time (min) | 9.0 |
| | F value (min) | 0.07 |
| Tea extract | Percentage of gallate forms(B) (wt%) | 53.6 |
| | Non-polymer catechins(A) (wt%) | 0.515 |
| | Percentage of epi-forms in non-polymer catechins (wt%) | 16.8 |
| Acrid taste | | C |
| Abnormal heated smell | | C |
| Bitterness | | C |

## Table 2

| | | | Examples | | |
|---|---|---|---|---|---|
| | | | 5 | 6 | 7 |
| First tea extract soln. | | Extracting temp. (°C) | 75 | | |
| | | Extracting time (min) | 15 | | |
| | | Solid-liquid separation | MF processing | | |
| Second teat soln. extract | | Turbidity (NTU) | 1.8 | | |
| | | Percentage of gallate forms(B) (wt%) | 49.9 | | |
| | | Non-polymer catechins(A) (wt%) | 0.448 | | |
| | | Percentage of epi-forms in non-polymer catechins (wt%) | 9.1 | | |
| | | Concentration of non-polymer catechins in solid content (wt%) | 37.5 | | |
| Heating conditions | | Heat treatment | Conducted | Conducted | Conducted |
| | | Heating temp (°C) | 100 | 124 | 130 |
| | | Heating time (min) | 9.0 | 1.5 | 1.5 |
| | | F value (min) | 0.07 | 2.9 | 11.7 |
| Tea extract | | Percentage of gallate forms(B) (wt%) | 51.1 | 51.2 | 51.6 |
| | | Non-polymer catechins(A) (wt%) | 0.438 | 0.427 | 0.429 |
| | | Percentage of epi-forms in non-polymer catechins (wt%) | 16.8 | 18.9 | 24.4 |
| Acrid taste | | | A | A | A |
| Abnormal heated smell | | | B | B | B |
| Bitterness | | | B | B | B |

EP 2 177 108 B1

Table 2 (Cont'd)

| | | | Examples | | Comp. Ex. |
|---|---|---|---|---|---|
| | | | 8 | 9 | 4 |
| First tea extract soln. | | Extracting temp. (°C) | 75 | | |
| | | Extracting time (min) | 15 | | |
| | | Solid-liquid separation | MF processing | | |
| Second teat extract soln. | | Turbidity (NTU) | 1.8 | | |
| | | Percentage of gallate forms (B) (wt%) | 49.9 | | |
| | | Non-polymer catechins (A) (wt%) | 0.448 | | |
| | | Percentage of epi-forms in non-polymer catechins (wt%) | 9.1 | | |
| | | Concentration of non-polymer catechins in solid content (wt%) | 37.5 | | |
| Heating conditions | | Heat treatment | Conducted | Conducted | Conducted |
| | | Heating temp (°C) | 133 | 138 | 90 |
| | | Heating time (min) | 1.5 | 0.5 | 30.0 |
| | | F value (min) | 23.3 | 25 | 0.02 |
| Tea extract | | Percentage of gallate forms (B) (wt%) | 51.4 | 51.2 | 50.8 |
| | | Non-polymer catechins (A) (wt%) | 0.426 | 0.430 | 0.450 |
| | | Percentage of epi-forms in non-polymer catechins (wt%) | 31.3 | 31.1 | 17.9 |
| Acrid taste | | | A | A | D |
| Abnormal heated smell | | | B | B | B |
| Bitterness | | | B | B | B |

EP 2 177 108 B1

Table 2 (Cont'd)

| | | | Comparative Examples | |
|---|---|---|---|---|
| | | | 5 | 6 |
| First tea extract soln. | | Extracting temp. (°C) | 75 | |
| | | Extracting time (min) | 15 | |
| | | Solid-liquid separation | MF processing | |
| Second teat extract soln. | | Turbidity (NTU) | 1.8 | |
| | | Percentage of gallate forms(B) (wt%) | 49.9 | |
| | | Non-polymer catechins(A) (wt%) | 0.448 | |
| | | Percentage of epi-forms in non-polymer catechins (wt%) | 9.1 | |
| | | Concentration of non-polymer catechins in solid content (wt%) | 37.5 | |
| Heating conditions | | Heat treatment | Conducted | Conducted |
| | | Heating temp (°C) | 100 | 133 |
| | | Heating time (min) | 3.0 | 3.0 |
| | | F value (min) | 0.02 | 46.5 |
| Tea extract | | Percentage of gallate forms(B) (wt%) | 50.8 | 51.3 |
| | | Non-polymer catechins(A) (wt%) | 0.435 | 0.423 |
| | | Percentage of epi-forms in non-polymer catechins (wt%) | 13.8 | 39.1 |
| Acrid taste | | | C | A |
| Abnormal heated smell | | | B | D |
| Bitterness | | | B | D |

EP 2 177 108 B1

Table 3

| | | Example 10 | Comp. Ex. 7 |
|---|---|---|---|
| First tea extract soln. | Extracting temp. (°C) | 80 | 80 |
| | Extracting time (min) | 15 | 15 |
| | Solid-liquid separation | MF Processing | MF processing |
| Second tea extract soln. | Turbidity (NTU) | 1.8 | 1.8 |
| | Percentage of gallate forms(B) (wt%) | 52.0 | 52.0 |
| | Non-polymer catechins(A) (wt%) | 0.478 | 0.478 |
| | Percentage of epi-forms in non-polymer catechins (wt%) | 9.1 | 9.1 |
| | Concentration of non-polymer catechins in solid content (wt%) | 37.7 | 37.7 |
| Second tea extract soln. after tannase treatment | Percentage of gallate forms(B) (wt%) | 15.1 | 15.0 |
| | Non-polymer catechins(A) (wt%) | 0.381 | 0.412 |
| | Percentage of epi-forms in non-polymer catechins (wt%) | 11.5 | 9.4 |
| Heating conditions | Heating temp (°C) | 124 | 80 |
| | Heating time (min) | 1.5 | 3 |
| | F value (min) | 2.9 | 0.0002 |
| Tea extract | Percentage of gallate forms(B) (wt%) | 15.1 | 15.0 |
| | Non-polymer catechins(A) (wt%) | 0.381 | 0.412 |
| | Percentage of epi-forms in non-polymer catechins (wt%) | 11.5 | 9.4 |
| Acrid taste | | A | D |
| Abnormal heated smell | | A | A |
| Bitterness | | A | A |

From Tables 1 to 3, the tea extracts obtained in Examples 1 to10 were all confirmed to be reduced in acrid taste, bitterness and abnormal heated smell and to be good in taste and flavor. On the other hand, the extracts obtained in Comparative Examples 1 to 5 and 7 were recognized to be strong in acrid taste, and a strong abnormal heated smell and bitterness were recognized on the extract obtained in Comparative Example 6. Further, significance of conducting heat treatment at a temperature of from 95 to 140°C for an F value of from 0.05 to 40 min was substantiated from FIG. 1.

Examples 11-20

Using the tea extracts obtained in Examples 1 to 10, packaged beverages were produced in accordance with the formulations shown in Table 4. The resultant packaged beverages were then evaluated for acrid taste. The results are also shown in Table 4.

Table 4

| | | Ex. 11 | Ex. 12 | Ex. 13 | Ex. 14 | Ex. 15 |
|---|---|---|---|---|---|---|
| Kinds of beverages | | Green tea | Green tea | Green tea | Green tea | Green tea |
| Examples of tea extracts | | 1 | 2 | 3 | 4 | 5 |
| Formulations | Green tea extract solutions (wt%) | 20.95 | 20.95 | 20.95 | 20.95 | 20.95 |
| | Purified products of green tea extract (wt%) | 0.53 | 0.53 | 0.53 | 0.53 | 0.53 |
| | Sodium ascorbate (wt%) | 0.064 | 0.064 | 0.064 | 0.064 | 0.064 |
| | 10% aq. soln. of sodium bicarbonate (wt%) | 0.037 | 0.037 | 0.037 | 0.037 | 0.037 |
| | Green tea flavor (wt%) | 0.045 | 0.045 | 0.045 | 0.045 | 0.045 |
| | Cyclodextrin (wt%) | 0.068 | 0.068 | 0.068 | 0.068 | 0.068 |
| | Deionized water (wt%) | Balance | Balance | Balance | Balance | Balance |
| | Total amount (wt%) | 100 | 100 | 100 | 100 | 100 |
| Sterilization conditions for beverages | Temp. (°C) | 138 | 138 | 138 | 138 | 138 |
| | F value (min) | 40 | 40 | 40 | 40 | 40 |
| Packaged beverages | pH (25°C) | 6.00 | 6.00 | 6.00 | 6.00 | 6.00 |
| | Non-polymer catechins(A) (wt%) | 0.127 | 0.127 | 0.127 | 0.127 | 0.127 |
| | Acrid taste | A | A | A | A | A |

EP 2 177 108 B1

Table 4 (Cont'd)

| | | Ex. 16 | Ex. 17 | Ex. 18 | Ex. 19 | Ex. 20 |
|---|---|---|---|---|---|---|
| Kinds of beverages | | Green tea | Green tea | Green tea | Green tea | Green tea |
| Examples of tea extracts | | 6 | 7 | 8 | 9 | 10 |
| Formulations | Green tea extract solutions (wt%) | 20.95 | 20.95 | 20.95 | 20.95 | 20.95 |
| | Purified products of green tea extract (wt%) | 0.53 | 0.53 | 0.53 | 0.53 | 0.53 |
| | Sodium ascorbate (wt%) | 0.064 | 0.064 | 0.064 | 0.064 | 0.064 |
| | 10% aq. soln. of sodium bicarbonate (wt%) | 0.037 | 0.037 | 0.037 | 0.037 | 0.037 |
| | Green tea flavor (wt%) | 0.045 | 0.045 | 0.045 | 0.045 | 0.045 |
| | Cyclodextrin (wt%) | 0.068 | 0.068 | 0.068 | 0.068 | 0.068 |
| | Deionized water (wt%) | Balance | Balance | Balance | Balance | Balance |
| | Total amount (wt%) | 100 | 100 | 100 | 100 | 100 |
| Packaged beverages | Sterilization conditions for beverages — Temp. (°C) | 138 | 138 | 138 | 138 | 138 |
| | Sterilization conditions for beverages — F value (min) | 40 | 40 | 40 | 40 | 40 |
| | pH (25°C) | 6.00 | 6.00 | 6.00 | 6.00 | 6.00 |
| | Non-polymer catechins (A) (wt%) | 0.127 | 0.127 | 0.127 | 0.127 | 0.127 |
| | Acrid taste | A | A | A | A | A |

From Table 4, the tea extracts obtained in Examples 1 to 10 were confirmed to be useful as materials for packaged beverages, as all the packaged beverages obtained in Examples 11 to 20 were reduced in acrid taste and were good in taste.

Example 21

(Production of green tea extract solution 11)

Placed in a kneader were deionized water heated at 65°C (4,320 g) and green tea leaves (produce of Miyazaki; 144 g), followed by extraction for 5 min under stirring. The tea leaves were then removed by a tea-leaf separating plate, and the resulting tea extract solution was transferred into a beaker. The beaker with the tea extract solution contained therein was immersed for 13 min in a hot bath, which was set at 98°C, to conduct heat sterilization (F value: 4 min). Subsequently, the tea extract solution was cooled to 25°C or lower to obtain a green tea extract solution 11.

(Production of purified green tea extract 11)

A commercial concentrated green tea extract (100 g, "POLYPHENONEHG", MitsuiNorinCo., Ltd.) was dispersed in 90.0 wt% ethanol (900 g), followed by aging for 30 minutes. The dispersion was filtered through No. 2 filter paper and then through filter paper of 0.2 μm pore size. Water (200 mL) was added to the filtrate, followed by concentration under reduced pressure. An aliquot (75.0 g) of the resultant concentrate was placed in a stainless steel vessel, the total amount was brought to 1, 000 g with deionized water, and then, a 5 wt% aqueous solution of sodium bicarbonate (3.0 g) was added to adjust its pH to 5.5. Under stirring conditions of 22°C and 150 r/min, a solution of tannase ("TANNASE KTFH" (Industrial Grade, 500 U/g minimum), product of Kikkoman Corporation; 0.27 g (2.4 wt% based on the non-polymer catechins) dissolved in deionized water (1.07 g) was then added. At the time point that the pH had dropped to 4.24 upon elapsed time of 55 minutes, the enzyme reaction was terminated. The stainless steel vessel was next immersed in a hot bath of 95°C, and was held at 98°C for 13 minutes (F value: 4 min) to completely inactivate the enzyme activity, and at the same time, to conduct sterilization treatment. After the stainless steel vessel was cooled to 25°C, concentration processing was conducted to obtain a purified product 11 of green tea extract.

(Production of packaged green tea beverage)

Cyclodextrin and sodium ascorbate were added to the green tea extract solution 11 to obtain a mixed solution. The purified product 11 of green tea extract was then mixed with the mixed solution and, after the concentration of non-polymer catechins in the tea beverage was adjusted, a green tea flavor was added, followed by a pH adjustment with a 10 wt% aqueous solution of sodium bicarbonate. The resultant solution was then subjected to UHT sterilization treatment (sterilization temperature: 138°C, sterilization time: 0.5 min, F value: 40 min). The composition of the thus-obtained packaged green tea beverage and the results of its evaluation for acrid taste are shown in Table 5.

Example 22

(Production of green tea extract solution 12)

Green tea leaves (produce of Miyazaki; 100 g) were placed in a closed extraction column (inner diameter: 70 mm, height: 137 mm). Deionized water (3,000g) heated at 65°C was pumped to upwardly circulate through the column at a rate of 0.5 L/min for 15 minutes, and was then recovered. At that time, the initial charge height of the tea leaves was 75 mm, the linear velocity was 13.0 cm/min, and the average residence time was 1.1 min. The tea extract solution recovered in a tank was then subjected to heat sterilization at 98°C for 13 min (F value: 4 min). Subsequently, the tea extract solution was cooled to 25°C to obtain a green tea extract solution 12.

(Product ion of purified product 11 of green tea extract)

By a similar procedure as in Example 21, a purified product 11 of green tea extract was obtained.

(Production of packaged green tea beverage)

By a similar procedure as in Example 21 except that the green tea extract solution 12 was used in place of the green tea extract solution 11, a packaged green tea beverage was obtained. The composition of the thus-obtained packaged green tea beverage and the results of its evaluation for acrid taste are shown in Table 5.

Example 23

(Production of green tea extract solution 11)

By a similar procedure as in Example 21, a green tea extract solution 11 was obtained.

(Production of purified green tea extract 12)

CTC green tea leaves (produce of Kenya; 1,200 g) were extracted for 10 min with deionized water (24, 000 g) of 90°C. The resulting mixture was cooled, squeezed, and then filtered through a wire screen to recover a green tea extract solution (19, 120 g). After a concentration operation was conducted, the concentrated solution was caused to pass with a residence time of 13 min (F value: 4 min) through a heat exchanger set at 98°C to conduct sterilization treatment. Spray drying was then conducted to obtain a concentrated green tea extract (382 g). An aliquot (100 g) of the resultant concentrated green tea extract was dispersed in 90 wt% ethanol (900 g). The dispersion was allowed to age for 30 min, and then filtered through No. 2 filter paper and filter paper of 0.2 μm pore size. Water (200 mL) was added to the filtrate, followed by concentration under reduced pressure to obtain a purified product 12 of green tea extract.

(Production of packaged green tea beverage)

By a similar procedure as in Example 21 except that the purified green tea extract 12 was used in place of the purified green tea extract 11, a packaged green tea beverage was obtained. The composition of the thus-obtained packaged green tea beverage and the results of its evaluation for acrid taste are shown in Table 5.

Example 24

(Production of a concentrated green tea extract)

In a beaker fitted with a stirrer, deionized water (8, 640 g) heated at 65°C and green tea leaves (produce of China; 288 g) were placed, followed by extraction for 5 min under stirring. The tea leaves were then removed, and the resulting tea extract solution was transferred into a beaker. The beaker with the tea extract solution contained therein was immersed for 13 min in a hot bath set at 98°C to conduct heat sterilization (F value: 4 min). The tea extract solution was then cooled to 25°C or lower to obtain a green tea extract solution. A concentrating operation and spray drying were then conducted to obtain a concentrated green tea extract (150 g).

(Production of purified green tea extract 11)

By a similar procedure as in Example 21, a purified green tea extract 11 was obtained.

(Production of packaged green tea beverage)

The purified green tea extract 11, the concentrated green tea extract, anhydrous citric acid, and a 10 wt% aqueous solution of sodium bicarbonate were dissolved in water. Added next were anhydrous crystalline fructose, erythritol, anhydrous citric acid, ascorbic acid, a green tea flavor, and a 10 wt% aqueous solution of sodium bicarbonate to adjust the pH, and the total amount was brought to 1,000 g. Finally, the resulting solution was subjected to UHT sterilization treatment (sterilization temperature: 138°C, sterilization time: 0.5 min, F value: 40 min). The composition of the thus-obtained packaged green tea beverage and the results of its evaluation for acrid taste are shown in Table 5.

Example 25

(Production of a concentrated black tea extract)

In a beaker fitted with a stirrer, deionized water (8,640 g) heated at 85°C and CTC black tea leaves (produce of Kenya; 288 g) were placed, followed by extraction for 5 min under stirring. The tea leaves were removed, and the resulting tea extract solution was transferred into a beaker. The beaker with the tea extract solution contained therein was immersed for 13 min (F value: 4 min) in a hot bath set at 98°C. The tea extract solution was then cooled to 25°C or lower to obtain a black tea extract solution. Spray drying was then conducted as a concentrating operation to obtain a concentrated black tea extract (150 g).

(Production of purified green tea extract 11)

By a similar procedure as in Example 21, a purified green tea extract 11 was obtained.

(Production of packaged black tea beverage)

The purified product 11 of green tea extract, the concentrated black tea extract solution, anhydrous citric acid, and a 10 wt% aqueous solution of sodium bicarbonate were dissolved. Added next were Anhydrous crystalline fructose, erythritol, ascorbic acid, a black tea flavor, and the total amount was brought to 1,000 g. Finally, the resulting solution was subjected to UHT sterilization treatment (sterilization temperature: 98°C, sterilization time: 0.5 min, F value: 0.001 min). The composition of the thus-obtained packaged black tea beverage and the results of its evaluation for acrid taste are shown in Table 5.

Example 26

(Production of oolong tea extract solution 21)

Oolong tea leaves (281 g) were charged in a column extractor equipped with an 80-mesh screen and having an inner diameter of 97 mm, and the top surface of the tea leaves was leveled to make the height even. A 0.40 wt% aqueous solution of sodium bicarbonate (70°C) was then fed as a shower from up above a column, and at the same time, a tea extract solution was drawn from a lower part of the column. After the aqueous solution of sodium bicarbonate had been fed five times as much as the charged weight of the oolong tea leaves, a tea extract solution was continuously drawn from the lower part of the column while feeding deionized water (90°C) as a replacement for the shower. When the weight of the drawn tea extract solution had reached 50 times as much as the charged weight of the oolong tea leaves, the extraction was stopped and the oolong tea extract was stirred into a homogeneous mixture. The extract solution recovered in a tank was then subjected to heat sterilization at 98°C for 13 min (F value: 4 min). Subsequently, the extract solution was cooled to 25°C to obtain a oolong tea extract' solution 21.

(Productionof purifiedproduct 11 of green tea extract)

By a similar procedure as in Example 21, a purified product 11 of green tea extract was obtained.

(Production of packaged oolong tea beverage)

Cyclodextrin and sodium ascorbate were added to the oolong tea extract solution 21 to obtain a mixed solution. The purified product 11 of green tea extract was then mixed with the mixed solution and, after the concentration of non-polymer catechins in the oolong tea beverage was adjusted, a oolong tea flavor was added, followed by a pH adjustment with sodium bicarbonate. Finally, the resultant solution was subjected to UHT sterilization treatment (sterilization temperature: 138°C, sterilization time: 0.5 min, F value: 40 min). The composition of the thus-obtained packaged oolong tea beverage and the results of its evaluation for acrid taste are shown in Table 5.

Example 27

(Production of packaged non-tea beverage)

To the purified product 11 of green tea extract obtained in Example 21, anhydrous crystalline glucose, erythritol, sucralose, anhydrous citric acid, sodium citrate, ascorbic acid, common salt, a grapefruit flavor, a grapefruit extract and cyclodextrin were added, and with deionized water, the total amount was brought to 1,000 g. Finally, the resulting solution was subjected to UHT sterilization treatment (sterilization temperature: 98°C, sterilization time: 0.5 min, F value: 0.001 min). The composition of the thus-obtained packaged non-tea beverage and the results of its evaluation for acrid taste are shown in Table 5.
Example 28

(Production of packaged non-tea beverage)

The purified green tea extract 11 obtained in Example 21, anhydrous citric acid and a 10 wt% aqueous solution of sodium bicarbonate were dissolved. Added next were anhydrous crystalline fructose, erythritol, ascorbic acid and a lemon-lime flavor, and the total amount was brought to 1, 000 g. Finally, the resulting solution was subjected to UHT sterilization treatment (sterilization temperature: 98°C, sterilization time: 0.5 min, F value: 0.001 min). The composition of the thus-obtained packaged non-tea beverage and the results of its evaluation for acrid taste are shown in Table 5.

Comparative Example 11

(Production of green tea extract solution 13)

By a similar procedure as in Example 21 except that no heat sterilization was conducted, a green tea extract solution 13 was produced.

(Production of purified green tea extract 13)

By a similar procedure as in Example 23 except that no heat sterilization was conducted, a purified green tea extract 13 was produced.

(Production of packaged green tea beverage)

Cyclodextrin and sodium ascorbate were added to the green tea extract solution 13 to obtain a mixed solution. The purified green tea extract 13 was then mixed with the mixed solution and, after the concentration of non-polymer catechins in the tea beverage was adjusted, a green tea flavor was added, followed by a pH adjustment with a 10 wt% aqueous solution of sodium bicarbonate. Finally, the resultant solution was subjected to UHT sterilization treatment (sterilization temperature: 138°C, sterilization time: 0.5 min, F value: 40 min). The composition of the thus-obtained packaged green tea beverage and the results of its evaluation for acrid taste are shown in Table 6.

Comparative Example 12

(Production of green tea extract solution 14)

Placed in a kneader were deionized water (4,320 g) heated at 65°C and green tea leaves (produce of Miyazaki; 144 g), followed by extraction for 5 min under stirring. The tea leaves were then removed by a tea-leaf separating plate, and the resulting extract solution was subjected to UHT sterilization treatment (sterilization temperature: 138°C, sterilization time: 0.1 min, F value: 15 min). Subsequently, the extract solution was cooled to 25°C or lower to obtain a green tea extract solution 14.

(Production of purified product green tea extract 14)

By a similar procedure as in Example 23 except that heat sterilization was conducted at 138°C for a sterilization time of 0.1 min (F value: 15 min), a purified green tea extract 14 was produced.

(Production of packaged green tea beverage)

Cyclodextrin and sodium ascorbate were added to the green tea extract solution 14 to obtain a mixed solution. The purified product 14 of green tea extract was then mixed with the mixed solution and, after the concentration of non-polymer catechins in the tea beverage was adjusted, a green tea flavor was added, followed by a pH adjustment with a 10 wt% aqueous solution of sodium bicarbonate. Finally, the resultant solution was subjected to UHT sterilization treatment (sterilization temperature: 138°C, sterilization time: 0.5 min, F value: 40 min). The composition of the thus-obtained packaged green tea beverage and the results of its evaluation for acrid taste are shown in Table 6.

Comparative Example 13

(Production of oolong tea extract solution 22)

By a similar procedure as in Example 26 except that no heat sterilization was conducted, a oolong tea extract solution 22 was produced.

(Production of purified product 13 of green tea extract)

By a similar procedure as in Example 23 except that no heat sterilization was conducted, a purified product 13 of green tea extract was produced.

(Production of packaged oolong tea beverage)

Cyclodextrin and sodium ascorbate were added to the oolong tea extract solution 22 to obtain a mixed solution. The purified product 13 of green tea extract was then mixed with the mixed solution and, after the concentration of non-polymer catechins in the oolong tea beverage was adjusted, a oolong tea flavor was added, followed by a pH adjustment with a 10 wt% aqueous solution of sodium bicarbonate. Finally, the resultant solution was subjected to UHT sterilization treatment (sterilization temperature: 138°C, sterilization time: 0.5 min, F value: 40 min). The composition of the thus-obtained packaged oolong tea beverage and the results of its evaluation for acrid taste are shown in Table 6.

Comparative Example 14

(Production of packaged non-tea beverage)

To the purified green tea extract 13 obtained in Comparative Example 11, glucose, erythritol, sucralose, citric acid, sodiumcitrate, ascorbic acid, common salt, a grapefruit flavor, a grapefruit extract and cyclodextrin were added, and with deionized water, the total amount was brought to 1, 000 g. Finally, the resulting solution was subjected to UHT sterilization  treatment (sterilization temperature: 98°C, sterilization time: 0.5 min, F value: 0.001 min). The composition of the thus-obtained packaged non-tea beverage and the results of its evaluation for acrid taste are shown in Table 6.
Table 5

| | | | Ex. 21 | Ex. 22 |
|---|---|---|---|---|
| Kind of tea | | | Green tea | Green tea |
| Extraction method of tea extract solution | | | Kneader extn. | Drip extn. |
| Heating conditions for tea extract solution | | Temp. (°C) | 98 | 98 |
| | | F value (min) | 4 | 4 |
| Material for purified product of green tea extract | | | Green tea extract | Green tea extract |
| Heating conditions for purified product of tea extract solution | | Temp. (°C) | 98 | 98 |
| | | F value (min) | 4 | 4 |
| Formulations | Green tea extract solution (wt%) | | 20.95 | 20.95 |
| | Concentrated green tea extract (wt%) | | - | - |
| | Concentrated black tea extract (wt%) | | - | - |
| | Oolong tea extract solution (wt%) | | - | - |
| | Purified product of green tea extract (wt%) | | 0.53 | 0.53 |
| | Anhydrous citric acid (wt%) | | - | - |
| | Sodium citrate (wt%) | | - | - |
| | Ascorbic acid (wt%) | | - | - |
| | Sodium ascorbate (wt%) | | 0.64 | 0.64 |
| | 10% aq. soln. of sodium bicarbonate (wt%) | | 0.037 | 0.037 |
| | Anhydrous crystalline fructose (wt%) | | - | - |
| | Anhydrous crystalline glucose (wt%) | | - | - |
| | Erythritol (wt%) | | - | - |
| | Sucralose (wt%) | | - | - |
| | Common salt (wt%) | | - | - |
| | Black tea flavor (wt%) | | - | - |
| | Green tea flavor (wt%) | | 0.045 | 0.045 |
| | Oolong tea flavor (wt%) | | - | - |
| | Grapefruit flavor (wt%) | | - | - |
| | Grapefruit extract (wt%) | | - | - |
| | Lemon-lime flavor (wt%) | | - | - |
| | Cyclodextrin (wt%) | | 0.068 | 0.068 |
| | Deionized water (wt%) | | Balance | Balance |
| | Total amount (wt%) | | 100 | 100 |
| Sterilization conditions for beverage | | Temp. (°C) | 138 | 138 |
| | | F value (min) | 40 | 40 |
| Packaged beverages | pH (25°C) | | 6.00 | 6.00 |
| | Non-polymer catechins(A) (wt%) | | 0.127 | 0.127 |
| | Percentage of gallate forms(B) (wt%) | | 44.1 | 44.1 |
| | Gallate forms(B)/non-polymer catechins(A) (weight ratio) | | 0.441 | 0.441 |
| | Caffeine(C)/non-polymer catechins(A) (weight ratio) | | 0.110 | 0.110 |
| | Acrid taste | | A | A |

Table 5 (Cont'd)

| | | Ex. 23 | Ex. 24 |
|---|---|---|---|
| Kind of tea | | Green tea | Green tea |
| Extraction method of tea extract solution | | Kneader extn. | Batchwise extn. |
| Heating conditions for tea extract solution | Temp. (°C) | 98 | 98 |
| | F value (min) | 4 | 4 |
| Material for purified product of green tea extract | | Green tea leaves | Green tea extract |
| Heating conditions for purified product of tea extract solution | Temp. (°C) | 98 | 98 |
| | F value (min) | 4 | 4 |
| Formulations | Green tea extract solution (wt%) | 20.95 | – |
| | Concentrated green tea extract (wt%) | – | 0.14 |
| | Concentrated black tea extract (wt%) | – | – |
| | Oolong tea extract solution (wt%) | – | – |
| | Purified product of green tea extract (wt%) | 0.53 | 0.66 |
| | Anhydrous citric acid (wt%) | – | 0.1 |
| | Sodium citrate (wt%) | – | – |
| | Ascorbic acid (wt%) | – | 0.045 |
| | Sodium ascorbate (wt%) | 0.064 | – |
| | 10% aq. soln. of sodium bicarbonate (wt%) | 0.037 | 0.057 |
| | Anhydrous crystalline fructose (wt%) | – | 3.86 |
| | Anhydrous crystalline glucose (wt%) | – | – |
| | Erythritol (wt%) | – | 0.75 |
| | Sucralose (wt%) | – | – |
| | Common salt (wt%) | – | – |
| | Black tea flavor (wt%) | – | – |
| | Green tea flavor (wt%) | 0.045 | 0.045 |
| | Oolong tea flavor (wt%) | – | – |
| | Grapefruit flavor (wt%) | – | – |
| | Grapefruit extract (wt%) | – | – |
| | Lemon-lime flavor (wt%) | – | – |
| | Cyclodextrin (wt%) | 0.068 | – |
| | Deionized water (wt%) | Balance | Balance |
| | Total amount (wt%) | 100 | 100 |
| Sterilization conditions for beverage | Temp. (°C) | 138 | 138 |
| | F value (min) | 40 | 40 |
| Packaged beverages | pH (25°C) | 6.00 | 6.00 |
| | Non-polymer catechins(A) (wt%) | 0.129 | 0.129 |
| | Percentage of gallate forms(B) (wt%) | 45.1 | 45.1 |
| | Gallate forms(B)/non-polymer catechins(A) (weight ratio) | 0.451 | 0.451 |
| | Caffeine(C)/non-polymer catechins(A) (weight ratio) | 0.110 | 0.052 |
| | Acrid taste | B | A |

Table 5 (Cont'd)

|  |  | Ex. 25 | Ex. 26 |
|---|---|---|---|
| Kind of tea | | Black tea | Oolong tea |
| Extraction method of tea extract solution | | Batchwise extn. | Drip extn. |
| Heating conditions for tea extract solution | Temp. (°C) | 98 | 98 |
| | F value (min) | 4 | 4 |
| Material for purified product of green tea extract | | Green tea extract | Green tea extract |
| Heating conditions for purified product of tea extract solution | Temp. (°C) | 98 | 98 |
| | F value (min) | 4 | 4 |
| Formulations | Green tea extract solution (wt%) | – | – |
| | Concentrated green tea extract (wt%) | – | – |
| | Concentrated black tea extract (wt%) | 0.05 | – |
| | Oolong tea extract solution (wt%) | – | 17.17 |
| | Purified product of green tea extract (wt%) | 0.85 | 0.68 |
| | Anhydrous citric acid (wt%) | 0.1 | – |
| | Sodium citrate (wt%) | – | – |
| | Ascorbic acid (wt%) | 0.045 | – |
| | Sodium ascorbate (wt%) | – | 0.04 |
| | 10% aq. soln. of sodium bicarbonate (wt%) | 0.054 | 0.01 |
| | Anhydrous crystalline fructose (wt%) | 3.86 | – |
| | Anhydrous crystalline glucose (wt%) | – | – |
| | Erythritol (wt%) | 0.75 | – |
| | Sucralose (wt%) | – | – |
| | Common salt (wt%) | – | – |
| | Black tea flavor (wt%) | 0.01 | – |
| | Green tea flavor (wt%) | – | – |
| | Oolong tea flavor (wt%) | – | 0.045 |
| | Grapefruit flavor (wt%) | – | – |
| | Grapefruit extract (wt%) | – | – |
| | Lemon-lime flavor (wt%) | – | – |
| | Cyclodextrin (wt%) | – | 0.068 |
| | Deionized water (wt%) | Balance | Balance |
| | Total amount (wt%) | 100 | 100 |
| Sterilization conditions for beverage | Temp. (°C) | 98 | 138 |
| | F value (min) | 0.0015 | 40 |
| Packaged beverages | pH (25°C) | 3.83 | 6.10 |
| | Non-polymer catechins(A) (wt%) | 0.127 | 0.126 |
| | Percentage of gallate forms(B) (wt%) | 45.1 | 44.6 |
| | Gallate forms(B)/non-polymer catechins(A) (weight ratio) | 0.451 | 0.446 |
| | Caffeine(C)/non-polymer catechins(A) (weight ratio) | 0.055 | 0.085 |
| | Acrid taste | A | A |

Table 5 (Cont'd)

| | | Ex. 27 | Ex. 28 |
|---|---|---|---|
| Kind of tea | | Sports drink | Sports drink |
| Extraction method of tea extract solution | | - | - |
| Heating conditions for tea extract solution | Temp. (°C) | - | - |
| | F value (min) | - | - |
| Material for purified product of green tea extract | | Green tea extract | Green tea extract |
| Heating conditions for purified product of tea extract solution | Temp. (°C) | 98 | 98 |
| | F value (min) | 4 | 4 |
| Formulations | Green tea extract solution (wt%) | - | - |
| | Concentrated green tea extract (wt%) | - | - |
| | Concentrated black tea extract (wt%) | - | - |
| | Oolong tea extract solution (wt%) | - | - |
| | Purified product of green tea extract (wt%) | 0.85 | 0.85 |
| | Anhydrous citric acid (wt%) | 0.165 | 0.1 |
| | Sodium citrate (wt%) | 0.085 | - |
| | Ascorbic acid (wt%) | 0.045 | 0.045 |
| | Sodium ascorbate (wt%) | - | - |
| | 10% aq. soln. of sodium bicarbonate (wt%) | - | 0.054 |
| | Anhydrous crystalline fructose (wt%) | - | 3.86 |
| | Anhydrous crystalline glucose (wt%) | 0.23 | - |
| | Erythritol (wt%) | 0.75 | 0.75 |
| | Sucralose (wt%) | 0.0114 | - |
| | Common salt (wt%) | 0.08 | - |
| | Black tea flavor (wt%) | - | - |
| | Green tea flavor (wt%) | - | - |
| | Oolong tea flavor (wt%) | - | - |
| | Grapefruit flavor (wt%) | 0.3 | - |
| | Grapefruit extract (wt%) | 0.1 | - |
| | Lemon-lime flavor (wt%) | - | 0.1 |
| | Cyclodextrin (wt%) | 0.115 | - |
| | Deionized water (wt%) | Balance | Balance |
| | Total amount (wt%) | 100 | 100 |
| Sterilization conditions for beverage | Temp. (°C) | 98 | 98 |
| | F value (min) | 0.0015 | 0.0015 |
| Packaged beverages | pH (25°C) | 3.48 | 4.02 |
| | Non-polymer catechins (A) (wt%) | 0.127 | 0.127 |
| | Percentage of gallate forms (B) (wt%) | 45.1 | 45.1 |
| | Gallate forms (B)/non-polymer catechins (A) (weight ratio) | 0.451 | 0.451 |
| | Caffeine (C)/non-polymer catechins (A) (weight ratio) | 0.055 | 0.055 |
| | Acrid taste | A | A |

Table 6

| | | Comp. Ex. 11 | Comp. Ex. 12 |
|---|---|---|---|
| Kind of tea | | Green tea | Green tea |
| Extraction method of tea extract solution | | Kneader extn. | Kneader extn. |
| Heating conditions for tea extract solution | Temp. (°C) | No steriliz'n | 138 |
| | F value (min) | No steriliz'n | 15 |
| Material for purified product of green tea extract | | Green tea leaves | Green tea leaves |
| Heating conditions for purified product of tea extract solution | Temp. (°C) | No steriliz'n | 138 |
| | F value (min) | No steriliz'n | 15 |
| Formulations | Green tea extract solution (wt%) | 20.95 | 20.95 |
| | Concentrated green tea extract (wt%) | - | - |
| | Concentrated black tea extract (wt%) | - | - |
| | Oolong tea extract solution (wt%) | - | - |
| | Purified product of green tea extract (wt%) | 0.53 | 0.53 |
| | Anhydrous citric acid (wt%) | - | - |
| | Sodium citrate (wt%) | - | - |
| | Ascorbic acid (wt%) | - | - |
| | Sodium ascorbate (wt%) | 0.064 | 0.064 |
| | 10% aq. soln. of sodium bicarbonate (wt%) | 0.037 | 0.037 |
| | Anhydrous crystalline fructose (wt%) | - | - |
| | Anhydrous crystalline glucose (wt%) | - | - |
| | Erythritol (wt%) | - | - |
| | Sucralose (wt%) | - | - |
| | Common salt (wt%) | - | - |
| | Black tea flavor (wt%) | - | - |
| | Green tea flavor (wt%) | 0.045 | 0.045 |
| | Oolong tea flavor (wt%) | - | - |
| | Grapefruit flavor (wt%) | - | - |
| | Grapefruit extract (wt%) | - | - |
| | Lemon-lime flavor (wt%) | - | - |
| | Cyclodextrin (wt%) | 0.068 | 0.068 |
| | Deionized water (wt%) | Balance | Balance |
| | Total amount (wt%) | 100 | 100 |
| Sterilization conditions for beverage | Temp. (°C) | 138 | 138 |
| | F value (min) | 40 | 40 |
| Packaged | pH (25°C) | 6.02 | 6.02 |
| | Non-polymer catechins(A) (wt%) | 0.126 | 0.126 |
| | Percentage of gallate forms(B) (wt%) | 52.1 | 52.1 |
| | Gallate forms(B)/non-polymer catechins(A) (weight ratio) | 0.521 | 0.521 |
| | Caffeine(C)/non-polymer catechins(A) (weight ratio) | 0.109 | 0.109 |
| | Acrid taste | C | D |

Table 6 (Cont'd)

| | | Comp. Ex. 13 | Comp. Ex. 14 |
|---|---|---|---|
| Kind of tea | | Oolong tea | Sports drink |
| Extraction method of tea extract solution | | Drip extn. | - |
| Heating conditions for tea extract solution | Temp. (°C) | No steriliz'n | No steriliz'n |
| | F value (min) | No steriliz'n | No steriliz'n |
| Material for purified product of green tea extract | | Green tea leaves | Green tea leaves |
| Heating conditions for purified product of tea extract solution | Temp. (°C) | No steriliz'n | No steriliz'n |
| | F value (min) | No steriliz'n | No steriliz'n |
| Formulations | Green tea extract solution (wt%) | - | - |
| | Concentrated green tea extract (wt%) | - | - |
| | Concentrated black tea extract (wt%) | - | - |
| | Oolong tea extract solution (wt%) | 17.17 | - |
| | Purified product of green tea extract (wt%) | 0.68 | 0.85 |
| | Anhydrous citric acid (wt%) | - | 0.165 |
| | Sodium citrate (wt%) | - | 0.085 |
| | Ascorbic acid (wt%) | - | 0.045 |
| | Sodium ascorbate (wt%) | 0.04 | - |
| | 10% aq. soln. of sodium bicarbonate (wt%) | 0.01 | - |
| | Anhydrous crystalline fructose (wt%) | - | - |
| | Anhydrous crystalline glucose (wt%) | - | 0.23 |
| | Erythritol (wt%) | - | 0.75 |
| | Sucralose (wt%) | - | 0.0114 |
| | Common salt (wt%) | - | 0.08 |
| | Black tea flavor (wt%) | - | - |
| | Green tea flavor (wt%) | - | - |
| | Oolong tea flavor (wt%) | 0.45 | - |
| | Grapefruit flavor (wt%) | - | 0.3 |
| | Grapefruit extract (wt%) | - | 0.1 |
| | Lemon-lime flavor (wt%) | - | - |
| | Cyclodextrin (wt%) | 0.068 | 0.115 |
| | Deionized water (wt%) | Balance | Balance |
| | Total amount (wt%) | 100 | 100 |
| Sterilization conditions for beverage | Temp. (°C) | 138 | 98 |
| | F value (min) | 40 | 0.0015 |
| Packaged | pH (25°C) | 6.08 | 3.51 |
| | Non-polymer catechins(A) (wt%) | 0.125 | 0.127 |
| | Percentage of gallate forms(B) (wt%) | 51.9 | 52.1 |
| | Gallate forms(B)/non-polymer catechins(A) (weight ratio) | 0.519 | 0.521 |
| | Caffeine(C)/non-polymer catechins(A) (weight ratio) | 0.084 | 0.054 |
| | Acrid taste | C | C |

34

It is evident from Tables 5 and 6 that the packaged beverages obtained by the production process according to the present invention were reduced in acrid taste.

## Claims

1. A process for producing a tea extract, which comprises subjecting a first tea extract solution, which has been obtained from tea, to solid-liquid separation so that a turbidity becomes 200 NTU or lower when a concentration of non-polymer catechins is adjusted to 1 wt.%, thereby obtaining a second tea extract solution in which a concentration of (A) non-polymer catechins is from 0.2 to 5 wt.% and a concentration of non-polymer catechins in solid content is from 15 to 80 wt%; and then subjecting the second tea extract solution to a heat treatment at a temperature of from 95 to 140°C for an F value of from 0.05 to 40 min.

2. The process according to claim 1, wherein the solid-liquid separation is conducted using a membrane having a pore size of from 0.1 to 0.8 $\mu$m.

3. The process according to claim 1 or 2, wherein the second tea extract solution is subjected to a heat treatment after treatment with an enzyme having tannase activity to adjust a percentage of (B) gallate forms in non-polymer catechins to from 1 to 60 wt.%.

4. The process according to any one of claims 1 to 3, wherein the tea is green tea leaves.

5. The process according to any one of claims 1 to 3, wherein the tea is semi-fermented green tea leaves or black tea leaves.

6. A tea extract obtainable by the process according to any one of claims 1 to 5.

7. A process for producing a packaged beverage, which comprises a step of subjecting a mixture, which comprises the tea extract according to claim 6, to a heat treatment under conditions comprising a temperature of from 80°C to 138°C and an F value of from 0.001 to 40 min after filling in a package.

8. The process for producing a packaged beverage according to claim 7, wherein the mixture being subjected to heat treatment comprises a purified green tea extract which has been subjected to a heat treatment under conditions comprising a temperature of 80°C or higher but lower than 130°C and an F value of 0.1 min or longer but shorter than 10 min.

9. The process for producing a packaged beverage according to claim 7, wherein the mixture being subjected to heat treatment comprises a purified product of green tea extract that has been subjected to a heat treatment under conditions comprising a temperature of 80°C or higher but lower than 130°C and an F value of 0.1 min or longer but shorter than 10 min.

10. The process according to any one of claims 7 to 9, which comprises from 0.05 to 0.5 wt.% of non-polymer catechins (A) in the packaged beverage.

11. The process according to any one of claims 7 to 10, wherein a percentage of gallate forms (B) in non-polymer catechins is from 5 to 50 wt.%.

12. The process according to any one of claims 7 to 11, wherein a weight ratio of (C) caffeine to the non-polymer catechins (A) [(C)/(A)] in the packaged beverage is from 0.0001 to 0.16.

13. A packaged beverage obtainable by the process according to any one of claims 7-12.

## Patentansprüche

1. Verfahren zur Herstellung eines Teeextrakts, das das Durchführen einer Fest-Flüssig-Separation mit einer aus Tee erhaltenen ersten Teeextraktlösung, so dass die Trübheit 200 NTU oder weniger wird, wenn eine Konzentration von nicht-polymeren Katechihen auf 1 Gew.% eingestellt wird, wodurch eine zweite Teeextraktlösung erhalten wird, in der eine Konzentration von (A) nicht-polymeren Katechinen von 0,2 bis 5 Gew.% ist und eine Konzentration von nicht-polymeren Katechinen im Festgehalt von 15 bis 80 Gew.% ist; und dann das Durchführen einer Wärmebehandlung mit der zweiten Teeextraktlösung bei einer Temperatur von 95 bis 140°C für einen F-Wert von 0,05 bis 40 Minuten umfasst.

2.  Verfahren gemäß Anspruch 1, worin die Fest-Flüssig-Separation unter Verwendung einer Membran durchgeführt wird, die eine Porengröße von 0,1 bis 0,8 $\mu$m hat.

3.  Verfahren gemäß Anspruch 1 oder 2, worin die zweite Teeextraktlösung nach Behandlung mit einem Enzym, das Tannase-Aktivität aufweist, zum Einstellen eines Prozentwerts von (B) Gallatformen in den nicht-polymeren Katechinen von 1 bis 60 Gew.%, einer Wärmebehandlung unterzogen wird.

4.  Verfahren gemäß irgendeinem der Ansprüche 1 bis 3, worin der Tee Grünteeblätter ist.

5.  Verfahren gemäß irgendeinem der Ansprüche 1 bis 3, worin der Tee halbfermentierte Grünteeblätter oder Schwarzteeblätter ist.

6.  Teeextrakt, erhältlich durch das Verfahren gemäß irgendeinem der Ansprüche 1 bis 5.

7.  Verfahren zur Herstellung eines verpackten Getränks, das einen Schritt des Durchführens einer Wärmebehandlung mit einer Mischung, die das Teeextrakt gemäß Anspruch 6 enthält, nach dem Füllen in eine Verpackung unter Bedingungen umfasst, die eine Temperatur von 80°C bis 138°C und einem F-Wert von 0,001 bis 40 Minuten umfassen.

8.  Verfahren zur Herstellung eines verpackten Getränks gemäß Anspruch 7, worin die Mischung, die der Wärmebehandlung unterzogen wird, ein gereinigtes Grünteeextrakt umfasst, das einer Wärmebehandlung unter Bedingungen unterzogen wurde, die eine Temperatur von 80°C oder höher aber niedriger als 130°C und einem F-Wert von 0,1 Minuten oder länger aber kürzer als 10 Minuten umfassen.

9.  Verfahren zur Herstellung eines verpackten Getränks gemäß Anspruch 7, worin die Mischung, die der Wärmebehandlung unterzogen wird, ein gereinigtes Produkt aus Grünteeextrakt umfasst, das einer Wärmebehandlung unter Bedingungen unterzogen wurde, die eine Temperatur von 80°C oder höher, aber niedriger als 130°C, und einen F-Wert von 0,1 Minuten oder länger, aber kürzer als 10 Minuten, umfassen.

10. Verfahren gemäß irgendeinem der Ansprüche 7 bis 9, das von 0,05 bis 0,5 Gew.% an nicht-polymeren Katechinen (A) im verpackten Getränk umfasst.

11. Verfahren gemäß irgendeinem der Ansprüche 7 bis 10, worin ein Prozentwert von Gallatformen (B) in den nicht-polymeren Katechinen von 5 bis 50 Gew.% ist.

12. Verfahren gemäß irgendeinem der Ansprüche 7 bis 11, worin ein Gewichtsverhältnis (C) Koffein zu den nicht-polymeren Katechinen (A)[(C)/(A)] im verpackten Getränkt von 0,0001 bis 0,16 ist.

13. Verpacktes Getränk, das durch das Verfahren gemäß irgendeinem der Ansprüche 7 bis 12 erhältlich ist.


**Revendications**

1.  Procédé de production d'un extrait de thé, qui comprend la séparation solide-liquide d'une première solution d'extrait de thé, qui a été obtenue à partir de thé, de manière à ce que la turbidité devienne 200 UTN ou inférieure lorsqu'une concentration de catéchines non polymères est ajustée à 1 % en poids, pour ainsi obtenir une deuxième solution d'extrait de thé dans laquelle une concentration de catéchines non polymères (A) est de 0,2 à 5 % en poids et une concentration de catéchines non polymères en termes de teneur en matière sèche est de 15 à 80 % en poids ; puis un traitement thermique de la deuxième solution d'extrait de thé à une température de 95 à 140 °C pendant une valeur F de 0,05 à 40 min.

2.  Procédé selon la revendication 1, dans lequel la séparation solide-liquide est réalisée à l'aide d'une membrane ayant une taille de pore de 0,1 à 0,8 $\mu$m.

3. Procédé selon la revendication 1 ou 2, dans lequel la deuxième solution d'extrait de thé est soumise à un traitement thermique après traitement par une enzyme ayant une activité de la tannase pour ajuster un pourcentage de formes de gallate (B) dans les catéchines non polymères de 1 à 60 % en poids.

4. Procédé selon l'une quelconque des revendications 1 à 3, dans lequel le thé est constitué de feuilles de thé vert.

5. Procédé selon l'une quelconque des revendications 1 à 3, dans lequel le thé est constitué de feuilles de thé vert ou de feuilles de thé noir semi-fermentées.

6. Extrait de thé pouvant être obtenu par le procédé selon l'une quelconque des revendications 1 à 5.

7. Procédé de production d'une boisson conditionnée, qui comprend une étape de traitement thermique d'un mélange, qui comprend l'extrait de thé selon la revendication 6, dans des conditions comprenant une température de 80 °C à 138 °C et une valeur F de 0,001 à 40 min après remplissage dans un emballage.

8. Procédé de production d'une boisson conditionnée selon la revendication 7, dans lequel le mélange soumis au traitement thermique comprend un extrait de thé vert purifié qui a été soumis à un traitement thermique dans des conditions comprenant une température de 80 °C ou supérieure mais inférieure à 130 °C et une valeur F de 0,1 min ou plus longue mais plus courte que 10 min.

9. Procédé de production d'une boisson conditionnée selon la revendication 7, dans lequel le mélange étant soumis au traitement thermique comprend un produit purifié d'extrait de thé vert qui a été soumis à un traitement thermique dans des conditions comprenant une température de 80 °C ou supérieure mais inférieure à 130 °C et une valeur F de 0,1 min ou plus longue mais plus courte que 10 min.

10. Procédé selon l'une quelconque des revendications 7 à 9, qui comprend de 0,05 à 0,5 % en poids de catéchines non polymères (A) dans la boisson conditionnée.

11. Procédé selon l'une quelconque des revendications 7 à 10, dans lequel un pourcentage de formes de gallate (B) dans les catéchines non polymères est de 5 à 50 % en poids.

12. Procédé selon l'une quelconque des revendications 7 à 11, dans lequel le rapport pondéral de la caféine (C) aux catéchines non polymères (A) [(C)/(A)] dans la boisson conditionnée est de 0,0001 à 0,16.

13. Boisson conditionnée pouvant être obtenue par le procédé selon l'une quelconque des revendications 7 à 12.

Fig. 1

**EP 2 177 108 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 60156614 A
- JP 3133928 A
- JP 59219384 A
- JP 2006223104 A
- JP 2006238828 A
- WO 2004060077 A
- JP 2004073057 A
- JP 2004159641 A
- JP 2007104967 A
- JP 2005130809 A
- JP 10290667 A
- JP 2003199495 A
- JP 5049401 A
- JP 6311846 A
- JP 2006340646 A
- JP 2004147606 A
- US 2006263454 A1
- JP 4020589 A
- JP 5260907 A
- JP 5306279 A
- US 20050003068 A